(19) Europäisches Patentamt
European Patent Office
Office européen des brevets

(11) EP 0 924 626 B1

(12) **FASCICULE DE BREVET EUROPEEN**

(45) Date de publication et mention de la délivrance du brevet:
**27.07.2005 Bulletin 2005/30**

(51) Int Cl.^7: **G06F 17/14**

(21) Numéro de dépôt: **98403098.1**

(22) Date de dépôt: **09.12.1998**

(54) **Processeur de calcul d'une transformation rapide de Fourier à architecture dite "pipelinée"**

Pipelineprozessor für die schnelle Fourier-Transformation

Pipelined fast Fourier processor

(84) Etats contractants désignés:
**DE FR GB IT**

(30) Priorité: **19.12.1997 FR 9716116**

(43) Date de publication de la demande:
**23.06.1999 Bulletin 1999/25**

(73) Titulaire: **STMicroelectronics S.A.**
**92120 Montrouge (FR)**

(72) Inventeur: **Cambonie, Joel**
**38190 La Combe de Lancey (FR)**

(74) Mandataire: **Casalonga, Axel**
**BUREAU D.A. CASALONGA - JOSSE**
**Paul-Heyse-Strasse 33**
**80336 München (DE)**

(56) Documents cités:
- **BASOGLU C ET AL: "An efficient FFT algorithm for superscalar and VLIW processor architectures" REAL-TIME IMAGING, DEC. 1997, ACADEMIC PRESS, UK, vol. 3, no. 6, pages 441-453, XP002073374 ISSN 1077-2014**
- **BLAIR G M: "A review of the discrete Fourier transform. 2. Non-radix algorithms, real transforms and noise" ELECTRONICS & COMMUNICATION ENGINEERING JOURNAL, OCT. 1995, UK, vol. 7, no. 5, pages 187-194, XP002073375 ISSN 0954-0695**
- **HUI C C W ET AL: "A 64-POINT FOURIER TRANSFORM CHIP FOR VIDEO MOTION COMPENSATION USING PHASE CORRELATION" IEEE JOURNAL OF SOLID-STATE CIRCUITS, vol. 31, no. 11, novembre 1996, pages 1751-1761, XP000691460**
- **SWARTZLANDER E E JR ET AL: "A radix 4 delay commutator for fast Fourier transform processor implementation" IEEE JOURNAL OF SOLID-STATE CIRCUITS, OCT. 1984, USA, vol. SC-19, no. 5, pages 702-709, XP002073376 ISSN 0018-9200**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 924 626 B1

## Description

L'invention concerne les dispositifs de calcul de transformée de Fourier à architecture dite "série" ou "pipelinée", et leur mode de fonctionnement.

De nombreuses implémentations de transformées de Fourier dédiées ou programmées sur des microprocesseurs de traitement du signal ont été exposées dans la littérature. La plupart de ces implémentations utilisent une variante de l'algorithme de Cooley-Tukey, bien connu de l'homme du métier, qui permet de réduire le nombre d'opérations arithmétiques nécessaires au calcul de la transformée de Fourier. Cet algorithme permet ainsi notamment de réduire le calcul d'une transformée de Fourier rapide de taille initiale $r^p$, où r représente lé "radix" selon une dénomination habituellement utilisée par l'homme du métier, en celui de r transformées de Fourier de taille $r^{p-1}$ et d'additions et de multiplications complexes supplémentaires. En réitérant cette réduction, on arrive au calcul de transformées de Fourier de taille r, aisément réalisables, notamment si r est choisi égal à 2 ou 4.

L'algorithme de Cooley-Tukey utilise un graphe de calcul faisant apparaître une structure en forme générale de papillon, bien connue de l'homme du métier, et communément désignée en langue anglaise sous le terme "butterfly".

Plusieurs architectures matérielles sont alors possibles pour implémenter une structure de calcul en forme de papillon.

Une première solution consiste à réaliser un opérateur matériel capable d'effectuer un calcul de type papillon, par papillon du graphe. Cependant, une telle solution n'est envisageable que pour l'implémentation de transformées de Fourier de petite taille.

Une deuxième solution consiste à ne réaliser qu'un seul opérateur matériel du type papillon, et destiné à effectuer successivement les calculs correspondant à tous les papillons de tous les étages du graphe. Une telle solution présente l'inconvénient de nécessiter d'une part un opérateur matériel très rapide, et d'autre part une mémoire d'entrée distincte de la mémoire servant à écrire les résultats intermédiaires de calcul et ce, afin d'éviter les conflits d'accès lorsqu'un bloc de données entre dans l'opérateur alors que le bloc précédent est encore en cours de traitement. Il est donc nécessaire de prévoir deux mémoires de N0 mots complexes, où N0 désigne la taille initiale de la transformée de Fourier, ce qui conduit à un circuit global d'une surface importante, notamment lorsque N0 est grand.

Une solution intermédiaire consiste à réaliser un opérateur matériel du type papillon par étage du graphe, ainsi qu'un élément de mémorisation, tel que des lignes à retard ou des registres à décalage, dont la fonction est de présenter en entrée de l'opérateur les données dans le bon ordre compte tenu des papillons du graphe de l'étage considéré.

De telles architectures sont dites "série" ou "pipelinées" selon une dénomination usuelle employée par l'homme du métier.

Plus précisément, un dispositif électronique de calcul d'une transformée de Fourier dite "à architecture pipelinée" comprend une pluralité d'étages de traitement successifs connectés en série entre l'entrée et la sortie du dispositif par des chemins de données internes. Ces étages comportent respectivement d'une part des moyens de traitement aptes à effectuer des traitements de transformée de Fourier de tailles élémentaires plus faibles que la taille initiale, sur des blocs de données de tailles successivement réduites d'un étage au suivant et, d'autre part, des moyens de mémorisation.

Par "taille initiale" de la transformée de Fourier on entend ici et dans la suite du texte la taille des blocs reçus en entrée du dispositif par le premier étage.

Les tailles élémentaires des transformées de Fourier effectuées par les différents étages peuvent être identiques et égales au radix de la transformée de Fourier. On parle alors de transformée de Fourier à radix "uniforme." Elles peuvent être différentes d'un étage à l'autre dans le cas de transformées de Fourier à radix "mixte".

Des exemples de telles architectures pipelinées sont décrits dans l'article de BI et JONES intitulé "a Pipelined FFT Processor for Word-Sequential Data", IEEE Transactions on Acoustic Speech and Signal Processing, vol. 37, n° 12, décembre 1989, pages 1982 - 1985. et dans l'article de BIDET et autres, intitulé "A Fast Single-Chip Implementation of 8192 Complex Point FFT", IEEE Journal of Solid-State Circuits, vol. 30. n° 3, mars 1995, pages 300 - 305.

Les moyens de mémorisation décrits dans ces architectures connues, comportent des lignes à retard qui sont des éléments très simples à gérer et qui présentent l'avantage d'être généralement compacts (utilisation de trois transistors par bit mémorisé). Cependant, ces éléments ne sont pas toujours disponibles en tant que cellules standard dans des librairies usuelles de composants utilisables pour la définition et la conception des circuits intégrés. En outre, leurs caractéristiques électriques sont dépendantes de la technologie utilisée de telle sorte que l'architecture du circuit doit être soigneusement réétudiée à chaque fois que la technologie évolue.

Par ailleurs, de telles architectures utilisent des lignes à retard dont la capacité de stockage par étage radix 4, est égale à 3N/2 où N est la taille des blocs traités par ledit étage.

Dans certaines applications, notamment dans des applications terrestres de télévision numérique utilisant pour la transmission un codage OFDM (Orthogonal Frequency Division Multiplex "multiplexage à répartition orthogonale de fréquence"), les différents symboles devant être traités par transformée de Fourier sont séparés par un intervalle de garde. Plus précisément, dans une application OFDM, chaque symbole reçu est précédé d'un intervalle de garde qui est en fait identique à la partie terminale dudit symbole. Dans ce genre d'application, il est alors particulièrement avantageux d'utiliser cette propriété pour détecter la position temporelle des différents symboles dans le flux entrant, et pour contrôler de ce fait la bonne synchronisation temporelle de ces différents symboles. A cet égard, on effectue généralement une corrélation du flux entrant avec le dernier symbole reçu et son intervalle de garde associé.

Ceci nécessite notamment en outre la mémorisation d'un symbole complet.

L'architecture à lignes à retard, dont la capacité de stockage par étage est égale à 3N/2, permet de réaliser un traitement de transformées de Fourier sur chaque symbole tout en délivrant des données temporellement retardées de la longueur d'un symbole, permettant ainsi d'effectuer la corrélation souhaitée.

L'invention vise notamment à apporter une solution radicalement différente à ce problème de taille mémoire nécessaire pour la mémorisation de chaque dernier symbole reçu.

Un but de l'invention est de proposer un étage de traitement radix 4 d'un dispositif de calcul d'une transformée de Fourier à architecture pipelinée, capable de travailler avec de très hautes fréquences d'horloge et de mémoriser chaque dernier symbole reçu, et ce tout en minimisant la taille mémoire nécessaire, et en utilisant des éléments de mémorisation classiques et aisément disponibles quelle que soit la technologie utilisée.

L'invention a également pour but de proposer un tel étage de traitement radix 4 capable d'être testé aisément avec des méthodes de test dits "full scan" bien connues de l'homme du métier.

L'invention a également pour but de tenir compte de l'intervalle de garde éventuel, séparant les différents symboles devant être traités par transformée de Fourier, notamment dans des applications terrestres de télévision numérique utilisant pour la transmission un codage OFDM (Orthogonal Frequency Division Multiplex), et ce même si la longueur de cet intervalle de garde n'est pas a priori connue.

L'invention propose donc un procédé de commande d'un étage de traitement radix 4 d'un dispositif électronique de calcul d'une transformée de Fourier à architecture dite "pipelinée". Un dispositif électronique de calcul à architecture pipelinée comprend une pluralité d'étages de traitement successifs connectés en série entre l'entrée et la sortie du dispositif, ces étages comportant respectivement d'une part des moyens de traitement aptes à effectuer des traitements de transformées de Fourier de tailles élémentaires plus faibles que la taille initiale, sur des blocs de données de tailles successivement réduites d'un étage au suivant, et d'autre part des moyens de mémorisation.

Un étage de traitement dit "à radix 4" comporte des moyens de traitement effectuant des traitements de transformées de Fourier de taille élémentaire égale à 4 sur chaque bloc de données reçu en entrée de l'étage.

Selon une caractéristique générale de l'invention, pour chaque bloc de N données reçu en entrée de l'étage, on ne stocke que trois quarts des données du bloc dans des moyens de mémorisation principaux comportant une mémoire principale à accès aléatoire, en particulier une mémoire statique simple accès, et on effectue un calcul de transformée de Fourier à partir de ces données mémorisées et des autres données du bloc. Par ailleurs, on ne stocke qu'une moitié des données reçues dans des moyens de mémorisation auxiliaires comportant une mémoire auxiliaire à accès aléatoire, par exemple également une mémoire statique simple accès, et on reconstitue toutes les données du bloc d'entrée à partir du contenu des moyens de mémorisation principaux et auxiliaires, de façon à obtenir un bloc de données reconstitué, temporellement retardé par rapport au bloc d'entrée.

Il sera ensuite possible d'effectuer une corrélation glissante entre la sortie de l'étage radix 4 délivrant les données temporellement retardées, et les données d'entrée.

L'utilisation de mémoires à accès aléatoire (mémoire vive), qu'elles soient double accès (à double port) ou simple accès (à port unique, c'est-à-dire autorisant soit un accès en écriture, soit un accès en lecture à chaque cycle de l'horloge interne du dispositif), nécessite une gestion spécifique d'adressage pour stocker et redélivrer dans le bon ordre les données intermédiaires mémorisées, gestion d'autant plus complexe que le radix de la transformée de Fourier est supérieur à 2, en particulier lorsqu'il est égal à 4, et va à l'encontre de tous les enseignements actuels en la matière qui prévoient l'utilisation de lignes à retard ou de registres à décalage.

Il a été observé par ailleurs que l'utilisation de mémoires à accès aléatoire permettait de réduire la capacité de stockage de l'étage par rapport à la capacité de stockage nécessaire lors de l'emploi de lignes à retard.

De tels composants sont en outre aisément disponibles dans les librairies usuelles de composants, en particulier dans leur forme la plus simple (mémoire simple accès), et sont totalement indépendants de la technologie utilisée et parfaitement compatibles avec des fréquences d'horloge très élevées.

Ainsi, selon l'invention, dans un étage de traitement à radix 4, la capacité de stockage nécessaire pour effectuer les calculs de transformée de Fourier est égale à 3N/4 données. Le gain en capacité de stockage est donc d'un facteur 2 par rapport à la solution de l'art antérieur prévoyant l'utilisation de lignes à retard. En outre, l'invention prévoit de ne rajouter qu'une capacité additionnelle de mémorisation égale à N/2 données (un demi-symbole) pour la reconstitution des N données d'un symbole. Ceci est d'autant plus remarquable que, selon l'invention, lors du calcul de la transformée de Fourier d'un bloc de N données, toutes les données mémorisées dans la mémoire principale (c'est-à-dire 3N/4 données) sont remplacées par des données intermédiaires de calcul au fur et à mesure de la réception des N/4 données restantes du bloc d'entrée.

La capacité totale de stockage de l'étage est donc égale à 5N/4 ce qui est inférieur à celle (3N/2) d'un étage à ligne à retard selon l'art antérieur.

Selon un mode de mise en oeuvre du procédé selon l'invention, l'étage reçoit séquentiellement les N données du bloc, ordonnées au sein de quatre segments consécutifs contenant chacun N/4 données. Chaque donnée d'un segment forme avec les données homologues des trois autres segments un groupe de quatre données. On stocke dans les moyens de mémorisation principaux les données contenues dans les trois premiers segments au fur et à mesure de leur réception. Au fur et à mesure de la réception des données contenues dans le quatrième segment,

on stocke dans les moyens de mémorisation auxiliaires d'une part les données contenues dans le troisième segment et qui sont mémorisées dans les moyens de mémorisation principaux, ainsi que d'autre part les données contenues dans le quatrième segment,

on effectue un traitement du type "papillon" sur chacun desdits groupes de façon à élaborer des groupes successifs de quatre données intermédiaires respectivement ordonnées au sein de quatre segments intermédiaires consécutifs, et

on remplace respectivement les données mémorisées dans les moyens de mémorisation principaux, par les données intermédiaires contenues dans les trois derniers segments intermédiaires.

On reconstitue avantageusement les données d'entrée contenues dans les deux premiers segments en les recalculant, tandis qu'on reconstitue les données contenues dans les deux derniers segments en les stockant temporairement dans les moyens de mémorisation auxiliaires avant de les en extraire.

Dans un mode de mise en oeuvre du procédé, dans lequel deux blocs d'entrée successifs sont séparés par un intervalle de garde, on stocke successivement toutes les données de l'intervalle de garde dans les moyens de mémoire principaux au fur et à mesure de la réception desdits données de l'intervalle de garde. On effectue ensuite des décalages successifs des emplacements de stockage des données de l'intervalle de garde, puis on les extrait successivement des moyens de mémorisation principaux pour les stocker successivement dans les moyens de mémorisation auxiliaires avant de les en extraire successivement, de façon à restituer un intervalle de garde temporellement retardé et séparant les deux blocs reconstitués successifs, eux-mêmes temporellement retardés par rapport aux deux blocs d'entrée.

Selon un mode de mise en oeuvre, on effectue les décalages successifs des emplacements de stockage des données de l'intervalle de garde ainsi que le stockage dans les moyens de mémorisation auxiliaires, au fur et à mesure de la réception des données contenues dans les trois premiers segments du bloc d'entrée.

L'invention a également pour objet un dispositif électronique de calcul d'une transformée de Fourier à architecture pipelinée. Selon une caractéristique générale de l'invention, il comprend au moins un étage de traitement à radix égal à 4 apte à recevoir en entrée des blocs successifs de N données. Cet étage de traitement à radix égal à 4 comporte des moyens de mémorisation principaux ayant une capacité de stockage égale à 3N/4 données et incluant une mémoire principale à accès aléatoire. L'étage comporte également des moyens de mémorisation auxiliaires ayant une capacité de stockage égale à N/2 données et incluant une mémoire auxiliaire à accès aléatoire. Cet étage comporte encore des moyens de traitement principaux effectuant des traitements de transformée de Fourier de taille élémentaire égale à 4 sur chaque bloc d'entrée à partir du contenu des moyens de mémorisation principaux et de N/4 autres données dudit bloc. L'étage comporte également des moyens de traitement auxiliaires reconstituant toutes les données du bloc d'entrée à partir du contenu des moyens de mémorisation principaux et auxiliaires, de façon à obtenir un bloc de données reconstitué, temporellement retardé par rapport au bloc d'entrée.

Selon un mode de réalisation de l'invention, les moyens de traitement principaux de l'étage à radix 4 effectuent respectivement N/4 traitements du type papillon sur N/4 groupes distincts de quatre données de chaque bloc de données traité par cet étage. Les moyens de mémorisation principaux comprennent une mémoire principale à accès aléatoire et n registres principaux mutuellement connectés en série avec la mémoire principale. La mémoire principale est apte à stocker N/4 -(n-1) mots de trois données, tandis que chaque registre principal est apte à stocker un mot de trois données. De même, les moyens de mémorisation auxiliaires comprennent une mémoire auxiliaire à accès aléatoire et n registre auxiliaires mutuellement connectés en série avec la mémoire auxiliaire. La mémoire auxiliaire est apte à stocker N/4-(n-1) mots de deux données tandis que chaque registre auxiliaire est apte à stocker un mot de deux données.

Bien que différentes architectures matérielles internes des moyens de traitement principaux soient envisageables pour l'implémentation des traitements du type papillon au sein de chaque étage, il s'avère en effet préférable que les moyens de traitement principaux de l'étage à radix 4 effectuent respectivement N/4 traitements du type "papillon" sur N/4 groupes disctincts de quatre données de chaque bloc de données traité par cet étage, N étant la taille du bloc.

Ces moyens de traitement principaux selon l'invention qui prévoient donc de n'appeler "qu'une seule fois" chaque donnée (ou opérande) du bloc reçu pour effectuer les différents traitements du type papillon, se distinguent ainsi notamment de l'opérateur matériel utilisé dans l'article de BIDET et al. précité, qui prévoit d'appeler plusieurs fois chaque opérande pour effectuer les traitements. Les moyens de traitement principaux d'un étage à radix 4 selon l'invention comportent alors huit additionneurs complexes et un multiplieur alors que l'art antérieur avec lignes à retard ne prévoit que six additionneurs et un multiplieur. Cependant, ces moyens de traitement principaux selon l'invention permettent de mémoriser moins de données intermédiaires et contribuent, en combinaison avec l'utilisation d'une mémoire à accès aléatoire, à minimiser encore la capacité de stockage de l'étage.

A cet égard, bien qu'il soit possible de prévoir que les moyens de mémorisation de cet étage soient uniquement constitués de mémoires à accès aléatoire, il est particulièrement avantageux d'associer à chaque mémoire à accès aléatoire un ou plusieurs niveaux de registres ou bascules, mutuellement connectés en série avec la mémoire. Ceci permet en effet de séparer la mémoire proprement dite de la partie opérative de l'étage et d'utiliser des outils automatiques de génération de vecteurs de test. Ces méthodes automatiques de test dites "méthodes full scan", bien connues de l'homme du métier, consistent notamment à charger toutes les bascules puis à effectuer des calculs et à réécrire les données dans les bascules de façon à réaliser le test.

Selon un mode de réalisation de l'invention, l'étage de traitement à radix 4 comporte une entrée pour recevoir séquentiellement au rythme d'un premier signal d'horloge (horloge "symbole"), les N données d'un bloc courant, ces données étant ordonnées au sein de quatre segments consécutifs contenant chacun N/4 données. Chaque donnée d'un segment forme avec les données homologues des trois autres segments un groupe de quatre données. Les moyens de traitement principaux de l'étage comportent alors un module additionneur/soustracteur apte à effectuer, à chaque cycle du premier signal d'horloge, un traitement du type papillon sur chacun desdits groupes ainsi formés de façon à élaborer des groupes successifs de quatre données intermédiaires respectivement ordonnées au sein de quatre segments intermédiaires consécutifs. Les moyens de traitement principaux comportent par ailleurs un module multiplicateur apte à multiplier, à chaque cycle du premier signal d'horloge, les données intermédiaires par des coefficients multiplicateurs prédéterminés. L'étage de traitement comporte également des moyens de commande principaux

aptes à délivrer au moyens de mémorisation principaux de cet étage les données contenues dans les trois premiers segments au fur et à mesure de leur réception (les données contenues dans le dernier segment n'étant pas stockées) et

aptes, au fur et à mesure de la réception des données contenues dans le quatrième segment, à remplacer respectivement les données mémorisées dans les moyens de mémorisation principaux par les données intermédiaires contenues dans les trois derniers segments intermédiaires.

Les moyens de traitement auxiliaires comportent un module auxiliaire de reconstitution apte à recalculer les données du bloc d'entrée contenues dans les premier et deuxième segments ainsi que des moyens de commande auxiliaires. Ces moyens de commande auxiliaires sont

aptes à délivrer au moyens de mémorisation auxiliaires les données contenues dans le troisième segment et mémorisées dans les moyens de mémorisation principaux, ainsi que les données contenues dans le quatrième segment, et

aptes à les en extraire de façon à reconstituer les données contenues dans les troisième et quatrième segments.

Selon un mode de réalisation de l'invention, les moyens de mémorisation principaux de cet étage comportent un premier registre principal connecté à la sortie de la mémoire principale et un deuxième registre principal connecté à l'entrée de la mémoire principale. La sortie du premier registre principal est connectée en premier lieu à l'entrée du deuxième registre principal par l'intermédiaire d'un premier multiplexeur commandable, en deuxième lieu à l'entrée du module additionneur/soustracteur, et en troisième lieu à l'entrée du module multiplicateur par l'intermédiaire d'un deuxième multiplexeur commandable. La sortie du module additionneur/soustracteur est connectée d'une part à l'entrée du premier registre principal par l'intermédiaire du premier multiplexeur et d'autre part à l'entrée du module multiplicateur par l'intermédiaire du deuxième multiplexeur.

Les moyens de mémorisation auxiliaires comportent un troisième registre auxiliaire connecté à la sortie de la mémoire auxiliaire, et un quatrième registre auxiliaire connecté à l'entrée de la mémoire auxiliaire. La sortie du troisième registre auxiliaire est connectée en premier lieu à l'entrée du quatrième registre auxiliaire par l'intermédiaire d'un troisième multiplexeur commandable. Ce troisième multiplexeur commandable est par ailleurs également connecté en entrée à la borne d'entrée de l'étage ainsi qu'à la sortie du premier registre principal. La sortie du troisième registre auxiliaire est connectée en deuxième lieu à l'entrée du module auxiliaire de reconstitution et en troisième lieu à la sortie de délivrance des données reconstituées et retardées, et ce, par l'intermédiaire d'un quatrième multiplexeur commandable. Une entrée du module auxiliaire est en outre reliée à une sortie du premier registre principal tandis que la sortie du module auxiliaire de reconstitution est connectée à une entrée du quatrième multiplexeur.

Les moyens de commande principaux et les moyens de commande auxiliaires comportent :

les quatre multiplexeurs,
un premier compteur modulo N (compteur d'écriture), cadencé par le premier signal d'horloge, réinitialisable à la réception de la première donnée de chaque bloc,
un deuxième compteur modulo N (compteur de lecture). cadencé par le premier signal d'horloge, réinitialisable à l'émission de la première donnée de sortie de l'étage (c'est-à-dire lorsque le premier compteur modulo N atteint la valeur 3N/4),
et un module de commande délivrant les signaux de commande des quatre multiplexeurs à partir des valeurs de comptage des deux compteurs.

Enfin, les moyens de traitement principaux et auxiliaires comprennent des moyens d'adressage communs de la mémoire principale et de la mémoire auxiliaire comportant un compteur modulo N/4-1 (en l'espèce N4/-(n-1) avec n = 2 ici car il y a deux registres par mémoire).

Lorsque, dans un mode de réalisation, deux blocs d'entrée successifs sont séparés par un intervalle de garde, les moyens de traitement principaux comportent avantageusement des moyens de décalage aptes à effectuer des décalages successifs des emplacements de stockage des données de l'intervalle de garde dans la mémoire principale. Ces moyens de décalage comportent avantageusement le deuxième multiplexeur (relié à l'entrée de la mémoire principale via le deuxième registre principal).

D'autres avantages et caractéristiques de l'invention apparaîtront à l'examen de modes de mise en oeuvre de réalisation de l'invention, nullement limitatifs, et des dessins annexés sur lesquels :

- la figure 1 est un synoptique schématique d'un dispositif selon l'invention à deux étages de traitement,
- la figure 2 illustre les traitements de type papillon effectués selon l'invention dans ces étages,
- la figure 3 est une représentation schématique de l'architecture matérielle d'un étage de traitement du dispositif de la figure 1.
- les figures 4a et 4b illustrent plus en détail certains des moyens illustrés sur la figure 3,
- la figure 5 illustre de façon schématique des flux de données d'entrée et de sortie du dispositif prenant en compte un intervalle de garde, ainsi qu'un flux de sortie reconstitué, et
- les figures 6a et 6b sont des chronogrammes temporels illustrant un cas particulier de fonctionnement d'un dispositif selon l'invention en prenant en compte un intervalle de garde entre les différents symboles à traiter.

Sur la figure 1, la référence DF désigne un dispositif de calcul d'une transformée de Fourier à architecture pipelinée, capable d'éffectuer une transformée de Fourier de taille initiale égale à 16 et comportant deux étages de traitement à radix 4 ET0 et ET1.

L'étage d'entrée ET0 reçoit des flots de symboles ou blocs de données BA comportant respectivement seize données $A_0$-$A_{15}$. La sortie de l'étage ET0 délivre des blocs successifs BB de quatre données qui sont traitées dans l'étage ET1. Cet étage ET1 délivre le symbole de sortie $X_{15}...X_4X_0$ correspondant au symbole d'entrée BA.

D'une façon générale, si pour un étage de traitement à radix 4, la taille du bloc de données reçu en entrée est égale à N, ce bloc de données peut être décomposé en quatre segments de N/4 données chacun, temporellement reçus consécutivement. Le premier segment est formé des données $A_i^K$, le deuxième segment est formé des données $A_{N/4+i}^K$, le troisième segment est formé des données $A_{N/2+i}^K$ et le quatrième segment est formé des données $A_{3N/4+i}^K$, i variant de 0 à N/4-1, et représentant le nombre de traitements du type papillon effectué dans l'étage sur chaque bloc de données reçu. K représente le $K^{ème}$ bloc reçu par l'étage.

Par ailleurs, l'homme du métier sait que si s désigne le rang de l'étage considéré, N est égal à $N0/4^s$ où N0 désigne la taille initiale de la transformée de Fourier, c'est-à-dire la taille de chaque symbole reçu par l'étage d'entrée.

En outre, si l'étage considéré est le premier, le $K^{ème}$ bloc correspond au $K^{ème}$ symbole reçu.

Par contre, si l'étage considéré n'est pas le premier (rang s différent de 0), chaque symbole en entrée du dispositif se décompose récursivement au sein de chaque étage en $4^s$ blocs K (K variant de 0 à $4^s$-1).

La figure 2 illustre le cas particulier des seize données (N=16) de chaque bloc reçu par l'étage ET0.

L'étage de traitement à radix 4 effectue alors N/4 traitements du type papillon sur N/4 groupes distincts de quatre données formés respectivement par une donnée du premier segment et les données homologues des trois autres segments.

Dans l'exemple particulier de la figure 2, l'étage ET0 effectue un premier traitement de type papillon sur le groupe formé des données $A_0$, $A_4$, $A_8$ et $A_{12}$, un deuxième traitement du type papillon sur un deuxième groupe de données formé des données $A_1$, $A_5$, $A_9$ et $A_{13}$ et ainsi de suite jusqu'à un quatrième traitement de type papillon sur le quatrième groupe de données formé des données $A_3$, $A_7$, $A_{11}$ et $A_{15}$.

Le résultat de ces traitements de type papillon sont des données intermédiaires également ordonnées au sein de quatre segments intermédiaires contenant chacun N/4 données intermédiaires.

Plus précisément, le premier segment intermédiaire contient les données intermédiaires $A_i^{K*}$, le deuxième segment intermédiaire contient les données intermédiaires $A_{N/4+i}^{K*}$, le troisième segment intermédiaire contient les données $A_{N/2+i}^{K*}$ et le quatrième segment intermédiaire contient les données $A_{3N/4+i}^{K*}$

Ces données intermédiaires sont obtenues selon les formules (I) à (IV) suivantes :

$$A_i^{K*} = A_i^K + A_{N/4+i}^K + A_{N/2+i}^K + A_{3N/4+i}^K \quad (I)$$

$$A_{N/4+i}^{K*} = A_i^K - A_{N/4+i}^K + A_{N/2+i}^K - A_{3N/4+i}^K \quad (II)$$

$$A_{N/2+i}^{K*} = A_i^K -j\, A_{N/4+i}^K - A_{N/2+i}^K +j\, A_{3N/4+i}^K \quad (III)$$

$$A_{3N/4+i}^{K*} = A_i^K + j\, A_{N/4+i}^K - A_{N/2+i}^K -j\, A_{3N/4+i}^K \quad (IV),$$

Dans ces formules, j désigne le nombre complexe dont le carré est égal à -1, et i varie de 0 à N/4-1.

Ces données intermédiaires sont ensuite multipliées par des coefficients prédéterminés $W^0$ (c'est-à-dire 1), $W^i$, $W^{2i}$ et $W^{3i}$ selon les segments considérés. Ces coefficients sont des coefficients complexes classiques bien connus de l'homme du métier.

Après multiplication par ces coefficients W, on obtient, en sortie de l'étage de traitement, quatre blocs $BB^{4K}$, $BB^{4K+1}$, $BB^{4K+2}$, $B_i^{4K+3}$ contenant respectivement N/4 données de sortie, $B_i^{4K}$, $B_i^{4K+1}$, $B_i^{4K+2}$ et $B_i^{4K+3}$, avec i variant de 0 à N/4-1.

Tous les blocs BB seront alors traités consécutivement par les moyens de traitement principaux du deuxième étage ET1, chacun de ces blocs étant considéré comme un symbole d'entrée pour ce deuxième étage.

Ainsi, sur la figure 2, les moyens de traitement principaux vont successivement effectuer un traitement de type papillon sur les quatre données de chaque bloc d'entrée BB, de façon à obtenir des données intermédiaires B*, puis des données de sortie qui sont en fait, dans le cas présent, le résultat de la transformée de Fourier des données d'entrée A.

Sur la figure 3, la référence MTE désigne les moyens de traitement principaux d'un étage de traitement radix 4 du dispositif DF. Ces moyens MTE comportent une borne d'entrée recevant le flux INS des différents blocs de données provenant soit d'un moyen extérieur au dispositif si l'étage considéré est le premier (dans ce cas les différents blocs représentent les différents symboles sur lesquels va s'effectuer la transformée de Fourier), soit de l'étage précédent. Les données contenues dans chacun des blocs reçus sont délivrées au rythme d'un premier signal d'horloge SMCK. Les moyens de traitement principaux MTE sont, quant à eux, cadencés par un signal d'horloge de base MCK dont la fréquence est soit deux fois plus importante que la fréquence du signal SMCK, soit quatre fois plus importante selon que les moyens de traitement MTE reçoivent au cours de chaque cycle du signal SMCK soit la partie réelle et la partie imaginaire de chaque donnée, soit uniquement la partie réelle ou la partie imaginaire.

Le flot des données de sortie OUS (après traitement de transformée de Fourier) est délivré à une borne de sortie de cet étage de traitement.

Par ailleurs, les moyens de traitement principaux MTE reçoivent un premier signal de contrôle STBL provenant soit de moyens extérieurs du dispositif si l'étage considéré est le premier, soit de l'étage précédent. Ce signal STBL indique, par exemple lors de son passage à l'état "1", la réception de la première donnée d'un bloc. De même, les moyens MTE délivrent à l'étage suivant un deuxième signal de contrôle STNX indiquant, par exemple lors de son passage à l'état "1", l'émission de la première donnée de sortie issue du traitement dudit bloc d'entrée. Le signal STBL reçu par l'étage courant est alors le signal STNX émis par l'étage précédent.

Associés à ces moyens de traitement principaux, l'étage de traitement radix 4 comporte des moyens de mémorisation principaux composés ici d'une mémoire principale statique à accès aléatoire simple accès MM rebouclée sur les moyens de traitement principaux MTE par l'intermédiaire d'un premier registre principal ou bascule REG1 connecté sur la sortie de la mémoire principale MM, et par l'intermédiaire d'un deuxième registre principal ou bascule REG2 connecté sur l'entrée de la mémoire principale MM. La mémoire MM est commandée en écriture/lecture par un signal R/W. Lorsque ce signal vaut "1" par exemple, il s'agit d'une lecture et lorsqu'il vaut "0", il s'agit d'une écriture. Par ailleurs, la mémoire est adressée par un pointeur d'adresse ADD. A chaque cycle du signal d'horloge de base MCK, s'effectue soit un accès en écriture, soit un accès en lecture de la mémoire MM. De ce fait, à chaque cycle du premier signal d'horloge SMCK s'effectue un accès en lecture suivi d'un accès en écriture de la mémoire. Le registre REG2 stocke les trois données qui seront écrites au cycle d'horloge suivant dans la mémoire principale MM.

Outre ces moyens de traitement principaux et ces moyens de mémorisation principaux, l'étage radix 4 comporte également des moyens de traitement auxiliaires MTX reliés à la sortie du premier registre principal REG1 et délivrant en sortie un flot OUD de données reconstituées et temporellement retardées par rapport aux données d'entrée INS.

Ces moyens de traitement auxiliaires MTX sont associés à des moyens de mémorisation auxiliaires composés ici d'une mémoire auxiliaire statique à accès aléatoire simple accès MMX rebouclée sur les moyens de traitement auxiliaires MTX par l'intermédiaire d'un troisième registre auxiliaire ou bascule REG3 connecté sur la sortie de la mémoire auxiliaire MMX, et par l'intermédiaire d'un quatrième registre auxiliaire ou bascule REG4 connecté sur l'entrée de la mémoire MMX. Ce quatrième registre auxiliaire REG4 est également connecté sur la borne d'entrée de l'étage de façon à recevoir directement certaines des données du flux d'entrée, comme on le verra plus en détail ci-après.

La mémoire MMX est commandée en écriture/lecture par le même signal R/W. Par ailleurs, la mémoire est adressée par le même pointeur d'adresse ADD que celui adressant la mémoire principale MM. Ainsi, à chaque cycle du premier signal d'horloge SMCK s'effectue également un accès en lecture suivi d'un accès en écriture de la mémoire auxiliaire MMX.

La capacité de stockage des moyens de mémorisation principaux de l'étage de traitement est égale à 3N/4 données. Compte tenu de la présence des deux niveaux de pipeline, c'est-à-dire des deux registres principaux REG1 et REG2, la capacité de stockage de la mémoire principale MM est égale à N/4-1 mots de trois données tandis que chaque registre REG1, REG2 est apte à stocker un mot de trois données. La mémoire principale MM peut donc se représenter comme une matrice de N/4-1 lignes et de 3 colonnes.

La capacité de stockage des moyens de mémorisation auxiliaires de l'étage de traitement est égale à N/2 données. Compte tenu de la présence des deux niveaux de pipeline, c'est-à-dire des deux registres auxiliaires REG3 et REG4, la capacité de stockage de la mémoire auxiliaire MMX est égale à N/4-1 mots de deux données tandis que chaque registre auxiliaire REG3, REG4 est apte à stocker un mot de deux données. La mémoire auxiliaire MMX peut donc se représenter comme une matrice de N/4-1 lignes et de deux colonnes.

Les moyens de traitement principaux comportent un module additionneur/soustracteur MD1 permettant de calculer les données intermédiaires selon les formules (I) à (IV) ci-avant, ainsi qu'un module multiplicateur MD2 permettant de multiplier ces données intermédiaires par les coefficients appropriés W. La sortie du module multiplicateur délivre donc le flot de données de sortie OUS.

Les quatre sorties 0, 1, 2, 3 du module MD1 délivrent respectivement les données intermédiaires $A_i^{K*}$, $A_{N/4+i}^{K*}$, $A_{N/2+i}^{K*}$, $A_{3N/4+i}^{K*}$ des quatre segments intermédiaires.

La borne d'entrée de l'étage, recevant le flot INS des données d'entrée, ainsi que les trois sorties 1, 2, 3 du premier registre REG1 sont respectivement connectées sur les quatre entrées 0, 1, 2, 3 du module additionneur MD1.

La borne d'entrée de cet étage est par ailleurs reliée à l'entrée 0 d'un premier multiplexeur à quatre entrées MX1 dont les trois sorties sont reliées aux trois entrées du registre REG2.

Les trois autres entrées 1, 2 et 3 du premier multiplexeur MX 1 sont à la fois reliées aux trois sorties 1, 2, 3 du registre REG1 et aux trois sorties 1, 2 et 3 du module MD1.

La sortie 0 du module MD1 est reliée à l'entrée 0 d'un deuxième multiplexeur MX2 à quatre entrées dont la sortie est reliée à l'entrée du module multiplicateur MD2. Les trois autres entrées 1, 2 et 3 du deuxième multiplexeur sont reliées aux trois sorties du premier registre REG1.

Les données de chaque bloc d'entrée sont indexées par un premier compteur (compteur d'écriture) WRC modulo N et comptant de 0 à N-1 par exemple à la fréquence du premier signal d'horloge SMCK. De même, les données de sortie sont indexées de 0 à N-1 par un deuxième compteur modulo N, ou compteur de lecture RDC, comptant également par exemple de 0 à N-1 à la fréquence du premier signal d'horloge.

A cet égard, il convient de noter que la montée à 1 du premier signal de contrôle STBL, indiquant la réception de la première donnée du bloc, réinitialise le compteur WRC tandis que la montée à 1 du deuxième signal de contrôle STNX signalant l'émission de la première donnée de sortie, réinitialise le compteur de lecture RDC. L'homme du métier aura par ailleurs remarqué que, selon l'invention, le deuxième signal de contrôle STNX passe à l'état 1 lorsque le premier compteur WRC atteint la valeur 3N/4-1.

Le compteur RDC commande le multiplexeur MX2.

Plus précisément, lorsque le compteur RDC compte de 0 à N/4-1, le module multiplicateur MD2 recevra la valeur délivrée par la sortie 0 du module MD1.

Lorsque le compteur RDC compte de N/4 à N/2-1, le module MD2 recevra la valeur disponible à la sortie 1 du registre REG1.

Lorsque le compteur RDC compte de N/2 à 3N/4-1, le module MD2 recevra la valeur disponible à la sortie 2 du registre REG 1.

Lorsque le compteur RDC compte de 3N/4 à N-1, le module MD2 recevra la valeur disponible à la sortie 3 du registre REG 1.

Les valeurs des sinus et cosinus des coefficients complexes W, qui seront utilisées dans le module MD2, sont par exemple stockées dans une mémoire morte adressée par le compteur de lecture RDC.

Le signal d'adresse ADD de la mémoire MM est délivré par un compteur modulo N/4-1 (non représenté ici à des fins de simplification) et comptant par exemple de 0 à N/4-2 à la fréquence du premier signal d'horloge SMCK.

Le multiplexeur MX1 est quant à lui commandé par un signal de commande SC1 dont la valeur dépend de celles des compteurs WRC et RDC. A cet égard, l'étage de traitement comporte des moyens de commande principaux MCE délivrant le signal SC1 à partir du contenu des compteurs WRC et RDC. On décrira plus en détail ci-après, de façon fonctionnelle, les différentes interconnexions entre le registre REG2 et les différents éléments de l'étage, via le multiplexeur MX1. A partir de cette description fonctionnelle, l'homme du métier saura aisément réaliser les moyens de commande MCE à partir de portes logiques.

Si l'on se réfère maintenant plus particulièrement à la figure 4b, on voit que les moyens de traitement auxiliaires MTX comprennent un module MDX qui va, comme on le verra plus en détail ci-après, reconstituer certaines des données du bloc d'entrée. Ce module MDX reçoit en entrée les sorties 2 et 3 du registre REG1 ainsi que les sorties du troisième registre auxiliaire REG3. La sortie du module MDX est reliée à la borne de sortie auxiliaire de l'étage, c'est-à-dire la borne de sortie délivrant les données reconstituées et temporellement retardées OUD, par l'intermédiaire d'un quatrième multiplexeur MX4 commandé par un signal de commande SC4.

Les deux sorties du registre REG3 sont reliées aux deux entrées du registre REG4 par l'intermédiaire d'un troisième multiplexeur MX3. Le registre REG4 stocke les données qui seront délivrées, au coup d'horloge suivant, dans la mémoire auxiliaire MMX.

Le registre REG4 est également susceptible de recevoir, par l'intermédiaire du multiplexeur MX3, certaines des données du flux d'entrée INS ainsi que les données issues de la troisième sortie du registre REG1. Les deux sorties du registre REG3 sont par ailleurs reliées aux deux autres entrées du multiplexeur MX4.

Les moyens de traitement auxiliaires comportent également des moyens de commande auxiliaires MCX délivrant les deux signaux de commande SC3 et SC4 des deux multiplexeurs MX3 et MX4. Ces deux signaux SC3 et SC4 dépendent des valeurs du compteur WRC et du compteur RDC. Les interconnexions entre les différents éléments décrits sur cette figure 4b, et par conséquent la commande de ces multiplexeurs, vont être décrites ci-après plus en détail de manière fonctionnelle. D'une manière analogue aux moyens de commande principaux MCE, l'homme du métier saura aisément réaliser les moyens de commande MCX à partir de portes logiques compte tenu de cette description fonctionnelle. En outre, bien qu'à des fins de simplification, les moyens de commande MCE et MCX aient été représentés de façon distincte sur les figures 4a et 4b, ils peuvent être matérialisés au sein d'un même circuit.

Le signal d'adresse ADD de la mémoire auxiliaire MMX est également délivré par le même compteur modulo N/4-1 qui compte par exemple de 0 à N/4-2 à la fréquence du premier signal d'horloge SMCK.

Dans certaines applications, notamment dans les récepteurs de télévision numérique, les différents symboles reçus en entrée du dispositif de calcul DF, sont mutuellement espacés d'un intervalle de garde IG (figure 5) constitué d'un nombre Ng plus ou moins grand de données, qui sont généralement la recopie de données terminales du symbole suivant l'intervalle de garde.

La figure 5 illustre le flot de symboles reçu par l'étage d'entrée ET0 à radix 4. Chaque symbole est un bloc de seize données. La partie haute de la figure 5 représente les deux premiers blocs reçus $BA^0$ et $BA^1$ séparés par l'intervalle de garde IG et dont les premières données respectives sont identifiées par la montée à 1 du signal STBL. L'intervalle de garde IG est donc, dans le cas présent, la recopie des données terminales du bloc $BA^1$.

La partie médiane de la figure 5 illustre les blocs de sortie BB correspondants. Ainsi, les blocs $BB^0$-$BB^3$ repérés par le signal STNX correspondent au bloc $BA^0$ tandis que les blocs $BB^4$-$BB^7$ correspondent au bloc $BA^1$. Le bloc $BB^4$ est séparé du bloc $BB^3$ par des données IIN qui ont été calculées avec celles de l'intervalle de garde et qui n'ont donc aucune signification physique.

La partie basse de la figure 5 illustre le flot de symboles reconstitués, temporellement retardé par rapport au flot des symboles d'entrée, et délivrés par la sortie OUD de l'étage de traitement. Dans la suite du texte, le signe "!" associé à une donnée ou à un bloc désigne cette donnée ou ce bloc temporellement retardé. On voit donc sur la partie basse de cette figure, que les deux blocs reconstitués $BA^0$! et $BA^1$! restent mutuellement séparés par l'intervalle de garde IG ! correspondant à l'intervalle de garde IG. Ceci étant, comme on le verra plus en détail ci-après, l'intervalle de garde est simplement retardé mais n'est pas recalculé comme certaines des données des blocs. Temporellement, l'intervalle retardé IG! est délivré simultanément à la partie terminale du bloc $BA^1$ ce qui, après corrélation dans des moyens classiques de corrélation glissante, fournit un pic de corrélation.

On va maintenant décrire plus en détail, en se référant plus particulièrement aux figures 4a et 4b, le mode de fonctionnement des moyens de traitement de cet étage, ainsi que le remplissage des différentes mémoires.

On suppose que la mémoire MM contient les données $A_i^K$, $A_{N/4+i}^K$, et $A_{N/2+i}^K$ des trois premiers segments du bloc K qui ont été stockés au fur et à mesure de leur réception, c'est-à-dire au fur et à mesure que le compteur WRC comptait de 0 à 3N/4-1. Dans la suite du texte, l'indice q désigne à des fins de simplification la somme "i+Ng modulo N/4", Ng étant le nombre de données de l'intervalle de garde IG.

D'une façon générale, lorsque le compteur WRC compte de 3N/4 à N-1, l'étage reçoit successivement en entrée les données $A_{3N/4+i}^{K}$ du quatrième segment du bloc. Cependant, ces données ne sont pas stockées dans la mémoire MM et sont utilisées avec les données homologues des trois premiers segments pour calculer les données intermédiaires $A_i^{K*}$, $A_{N/4+i}^{K*}$, $A_{N/2+i}^{K*}$ et $A_{3N/4+i}^{K*}$ des quatre segments intermédiaires.

Cependant, les données intermédiaires $A_i^{K*}$ du premier segment intermédiaire ne sont pas stockées dans la mémoire principale MM et sont directement transmises au module multiplicateur MD2.

Par contre, au fur et à mesure de la réception des données du quatrième segment du bloc K, les données mémorisées dans la mémoire principale MM et relatives aux trois premiers segments du bloc K sont respectivement remplacées par les données intermédiaires calculées par le module MD1 et relatives aux trois derniers segments intermédiaires.

Par ailleurs, au fur et à mesure de la réception des données du quatrième segment du bloc K, on stocke dans la mémoire auxiliaire d'une part les données du troisième segment et qui était mémorisées dans la mémoire principale MM, et d'autre part, les données entrantes du quatrième segment.

On va maintenant décrire le fonctionnement phase par phase.

<u>phase 1</u> : la valeur du compteur WRC est égale à 3K/4 et celle du compteur RDC est nulle.

La troisième sortie du registre REG1 est reliée à la première entrée du registre REG4 pour y stocker la donnée $A_{N/2}^{K}$. L'entrée 2 du registre REG4 est alors reliée à la borne d'entrée de l'étage et reçoit la donnée $A_{3N/4}^{K}$. Les sorties 1 et 2 du registre REG3 contiennent respectivement les données $A_{N/2+Ng}^{K-1}$, et $A_{3N/4+Ng}^{K-1}$. La sortie 2 du registre REG3 est alors reliée à la borne de sortie OUD pour délivrer la donnée reconstituée et temporellement retardée $A_{3N/4+Ng}^{K-1}$.

<u>phase 2</u> : Le compteur WRC compte de 3N/4+1 à N-1, le compteur RDC compte de 1 à N/4-1 et i varie de 1 à N/4-1 au rythme du compteur WRC.

C'est cette fois-ci la première sortie du registre auxiliaire REG3 qui est reliée à la sortie retardée OUD de façon à délivrer la donnée de l'intervalle de garde $G_q^{K-1}$.

La deuxième sortie du registre REG3 contient alors la donnée $A_{3N/4+q}^{K-1}$.

<u>phase 3</u> : Le compteur WRC compte de 0 à N/4-1, le compteur RDC compte de N/4 à N/2-1, et i varie de 0 à N/4-1 au rythme du compteur WRC.

Dans cette phase, la réinitialisation du compteur WRC à zéro correspond à la valeur N modulo N de ce compteur.

On reçoit alors à l'entrée de l'étage de traitement les données $G_i^K$ de l'intervalle de garde. Il convient de noter ici que ces données $G_i^K$ qui font suite au bloc K sont en fait la recopie de la fin du bloc K+1.

Les sorties 1, 2, 3 du registre REG1 délivrent respectivement les données intermédiaires $A_{N/4+i}^{K*}$, $A_{N/2+i}^{K*}$ et $A_{3N/4+i}^{K*}$.

Les sorties 2 et 3 du registre REG1 sont connectées aux entrées 2 et 3 du registre REG2 pour y stocker les données correspondantes. Par contre, l'entrée 1 du registre REG2 est connectée à l'entrée INS de l'étage de façon à recevoir les données de garde $G_i^K$.

Le mot ($A_{N/2+i}^{K}$, $A_{3N/4+i}^{K}$) est lu dans le registre REG3 et redélivré au registre REG4.

Le module de reconstitution auxiliaire reconstitue la donnée temporellement retardée $A_i^K!$ à partir de la formule (V) ci-dessous

$$A_i^K! = (A_{N/2+i}^{K*} + A_{3N/4+i}^{K*})/2 + A_{N/2+i}^{K} \quad (V)$$

Cette donnée retardée $A_i^K!$ est délivrée à la sortie auxiliaire OUD.

A un moment donné, le compteur WRC va être réinitialisé à zéro lors de la réception de la donnée $A_i^{K+1}$ du bloc suivant K+1 (la valeur de i est alors également réinitialisée à 0). Par contre, le compteur RDC n'aura pas quant à lui encore atteint la valeur N/2 .

Tout ce qui vient d'être décrit pour cette phase 3, reste alors valable en remplaçant la donnée $G_i^K$ par $A_i^{K+1}$ et en remplaçant, en ce qui concerne les autres données, l'indice i par l'indice q. Par ailleurs, le module auxiliaire de reconstitution délivre alors la donnée temporellement retardée $A_q^K!$.

<u>phase 4</u> : Le compteur WRC est encore dans sa phase de comptage de 0 à N/4-1 mais le compteur RDC compte maintenant de N/2 à 3N/4 - 1.

Le mot ($G_q^K$, $A_{N/2+q}^{K*}$, $A_{3N/4+q}^{K*}$) est lu dans le registre REG1.

Le mot ($A_i^{K+1}$, $G_q^K$, $A_{3N/4+q}^{K*}$) est écrit dans le registre REG2. Les deux dernières données de ce mot proviennent du registre REG1 tandis que la première donnée provient du flot d'entrée.

Le mot ($A_{N/2+q}^{K}$, $A_{3N/4+q}^{K}$) est lu dans le registre REG3 et restocké dans le registre REG4.

La donnée $A_{N/4+q}^{K}!$ est reconstituée dans le module de reconstitution MDX à partir de la formule (VI)

$$A_{N/4+q}^{K}! = j\,(A_{N/2+q}^{K*} - A_{3N/4+q}^{K*})/2 + A_{3N/4+q}^{K} \quad \text{(VI).}$$

L'homme du métier aura remarqué ici que l'on a commencé à décaler d'une colonne vers la droite les emplacements de stockage des données de l'intervalle de garde dans la mémoire principale.

phase 5 : Le compteur WRC compte maintenant de N/4 à N/2-1, le compteur RDC compte toujours de N/2 à 3N/4-1 et i varie de 0 à N/4-1 au rythme du compteur WRC.

Le mot ($A_i^{K+1}$, $A_{N/2+q}^{K*}$, $A_{3N/4+q}^{K*}$) est lu dans le registre REG1.

Le mot ($A_i^{K+1}$, $A_{N/4+i}^{K+1}$, $A_{3N/4+q}^{K*}$) est stocké dans le registre REG2. La deuxième donnée de ce mot provient directement du flot d'entrée tandis que les deux autres données proviennent du registre REG1.

Le registre REG3 est toujours directement relié au registre REG4. Plus précisément, le mot ($A_{N/2+q}^{K}$, $A_{3N/4+q}^{K}$) est lu dans le registre REG3 et restocké dans le registre REG4.

Le module auxiliaire de reconstitution reconstitue selon la formule (VI) la donnée temporellement retardée $A_{N/4+q}^{K}!$ et la délivre à la sortie auxiliaire OUD.

phase 6 : Le compteur WRC est toujours dans sa phase de comptage de N/4 à N/2-1 (i n'a pas été réinitialisé à 0) et le compteur RDC compte de 3N/4 à N-1.

Le mot ($A_i^{K+1}$, $G_q^{K}$, $A_{3N/4+q}^{K*}$) est lu dans le registre REG1.

Le mot ($A_i^{K+1}$, $A_{N/4+i}^{K+1}$, $G_q^{K}$) est stocké dans le registre REG2. La deuxième donnée de ce mot provient toujours du flot d'entrée tandis que les deux autres données proviennent encore du registre REG1.

L'homme du métier aura également remarqué qu'on poursuit ici le décalage vers la droite d'une colonne des données de l'intervalle de garde.

Les registres auxiliaires REG3 et REG4 sont toujours directement mutuellement connectés. Plus précisément, le mot ($A_{N/2+q}^{K}$, $A_{3N/4+q}^{K}$) est lu dans le registre REG3 et stocké dans le registre REG4.

Par contre, la première sortie du registre REG3 est directement reliée à la sortie OUD de façon à délivrer la donnée temporellement retardée $A_{N/2+q}^{K}!$. L'homme du métier aura donc remarqué que cette donnée reconstituée n'a pas été recalculée mais a simplement été extraite de la mémoire auxiliaire.

phase 7 : Le compteur WRC compte de N/2 à 3N/4-1. i variant de 0 à N/4-1 au rythme de ce comptage, et le compteur RDC compte toujours de 3N/4 à N-1.

Le mot ($A_i^{K+1}$, $A_{N/4+i}^{K+1}$, $A_{3N/4+q}^{K*}$) est lu dans le registre REG1.

Le mot ($A_i^{K+1}$, $A_{N/4+i}^{K+1}$, $A_{N/2+i}^{K+1}$) est stocké dans le registre REG2.

Les deux premières données proviennent du registre REG1 tandis que la troisième donnée de ce mot provient directement du flot d'entrée.

Les deux registres auxiliaires REG3 et REG4 sont mutuellement directement connectés. Plus précisément, le mot ($A_{N/2+q}^{K}$, $A_{3N/4+q}^{K}$) est lu dans le registre REG3 et stocké dans le registre REG4. La première sortie du registre REG3 est directement reliée à la sortie OUD délivrant la donnée temporellement retardée $A_{N/2+q}^{K}!$.

phase 8 : Le compteur WRC est toujours dans sa phase de comptage de N/2 à 3N/4-1 (i n'a pas été réinitialisé à 0) mais le compteur RDC compte maintenant de 0 à N/4-1 puisqu'il a été réinitialisé automatiquement à zéro après la valeur N-1.

Le mot ($A_i^{K+1}$, $A_{N/4+i}^{K+1}$, $G_q^{K}$) est lu dans le registre REG1.

Le mot ($A_i^{K+1}$, $A_{N/4+i}^{K+1}$, $A_{N/2+i}^{K+1}$) est stocké dans le registre REG2. Les deux premières données de ce mot proviennent du registre REG1 tandis que la troisième donnée provient directement du flot d'entrée.

En outre, la donnée de l'intervalle de garde $G_q^{K}$ (sortie n° 3 du registre REG1) est délivrée à l'entrée 1 du registre REG4 tandis que l'entrée 2 du registre REG4 reçoit la donnée présente à la sortie 2 du registre REG3, soit $A_{3N/4+q}^{K}$. La donnée lue à la sortie 1 du registre REG3 est la donnée $A_{N/2+q}^{K}$. C'est cette fois-ci la sortie 2 du registre REG3 qui est directement reliée à la sortie retardée OUD.

L'homme du métier aura remarqué ici que la donnée de l'intervalle de garde a été transférée dans les moyens de mémorisation auxiliaires, avant d'en être extraite ultérieurement.

A l'issue de cette phase, la mémoire principale MM contient à nouveau les données des trois premiers segments du bloc K+1 et un nouveau cycle complet d'écriture/lecture peut recommencer (phase 1).

L'homme du métier aura remarqué que la valeur $N_g$ n'a pas besoin d'être connue a priori, pour autant dans cet exemple qu'elle reste inférieure à N/4. En effet, c'est uniquement à partir des transitions 0, N/4, N/2 et 3N/4 des compteurs WRC et RDC que sont élaborés les différents signaux de commande des différents multiplexeurs.

Enfin, le fait, selon l'invention, de commander l'adressage de la mémoire principale et de la mémoire auxiliaire à partir d'un même compteur d'adresses simplifie grandement la réalisation matérielle du plan mémoire.

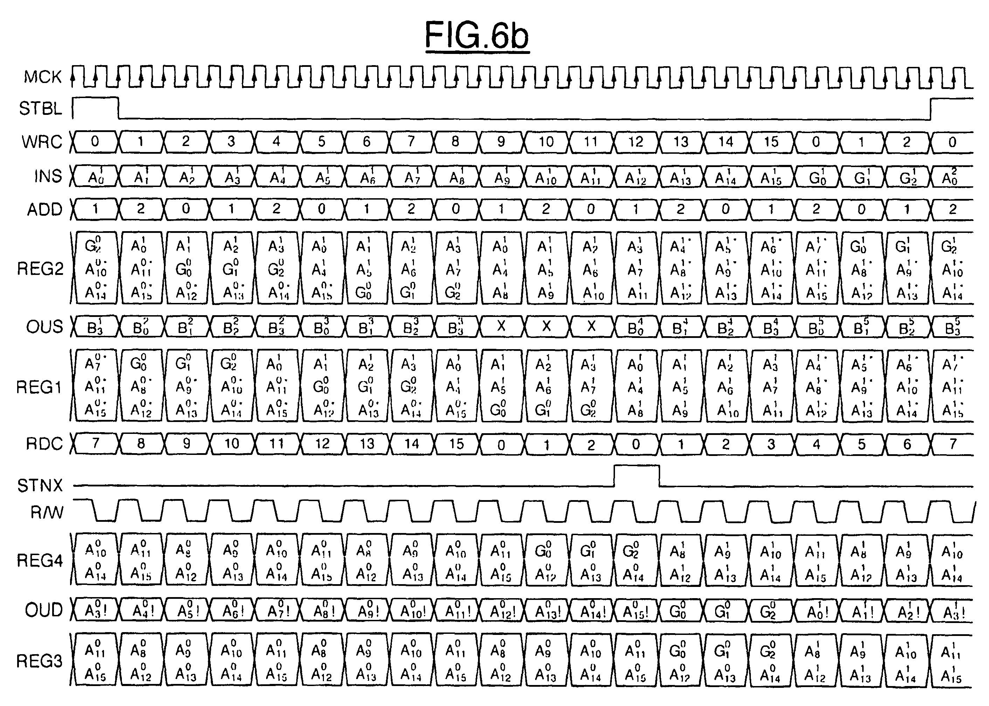

Les figures 6a et 6b représentent le chronogramme temporel correspondant au traitement des blocs $BA^0$ et $BA^1$ dans l'étage d'entrée en accord avec le mode de fonctionnement décrit précédemment. Il convient de noter ici que les lignes REG2 et REG4 représentent sur ces figures le contenu valide en sortie de ces registres, ce qui explique le décalage à droite d'un cycle d'horloge par rapport à la valeur du compteur WRC. Le premier cycle de comptage du compteur WRC de 0 à 15 (figure 6a) correspond à une phase de remplissage initiale de la mémoire principale MM. Enfin dans cet exemple Ng = 3.

Bien entendu, tout ce qui vient d'être décrit se généralise à des dispositifs électronique de calcul de transformées de Fourier de grande taille initiale. Ainsi, dans les applications de télévision numérique nécessitant d'effectuer des transformées de Fourier de 8192 points, on prévoit six étages radix 4 suivis d'un étage terminal radix 2 classique.

Dans le cas où des mémoires double accès seraient utilisées à la place des mémoires simple accès, la fréquence du signal d'horloge MCK serait égale à la fréquence du signal d'horloge SMCK (si les parties imaginaire et réelle de chaque donnée sont reçues à chaque cycle du signal SMCK) et l'adresse de lecture des mémoires MM et MMX seraient alors prises égale à l'adresse d'écriture diminuée de 1.

## Revendications

1. Procédé de commande d'un étage de traitement radix 4 d'un dispositif de calcul d'une transformée de Fourier à architecture pipelinée, **caractérisé par le fait que**, pour chaque bloc de N données reçu en entrée de l'étage, on ne stocke que trois quarts des données du bloc dans des moyens de mémorisation principaux (MM) comportant une mémoire principale à accès aléatoire, et on effectue un calcul de transformée de Fourier à partir de ces données mémorisées et des autres données du bloc, et **par le fait qu'**on ne stocke qu'une moitié des données reçues dans des moyens de mémorisation auxiliaires (MMX) comportant une mémoire auxiliaire à accès aléatoire, et on reconstitue toutes les données du bloc à partir du contenu des moyens de mémorisation principaux et auxiliaires de façon à obtenir un bloc de données reconstitué (BA!), temporellement retardé par rapport au bloc d'entrée (BA).

2. Procédé selon la revendication 1, **caractérisé par le fait que** l'étage (ET0) reçoit séquentiellement les N données du bloc ordonnées au sein de quatre segments consécutifs contenant chacun N/4 données, chaque donnée d'un segment formant avec les données homologues des trois autres segments un groupe de quatre données, **par le fait qu'**on stocke dans les moyens de mémorisation principaux (MM) les données contenues dans les trois premiers segments au fur et à mesure de leur réception, **par le fait qu'**au fur et à mesure de la réception des données contenues dans le quatrième segment, on stocke dans les moyens de mémorisation auxiliaires (MMX) les données contenues dans le troisième segment et mémorisées dans les moyens de mémorisation principaux, ainsi que les données contenues dans le quatrième segment, on effectue un traitement du type "papillon" sur chacun desdits groupes de façon à élaborer des groupes successifs de quatre données intermédiaires (A*) respectivement ordonnées au sein de quatre segments intermédiaires consécutifs, et on remplace respectivement les données mémorisées dans les moyens de mémorisation principaux, par les données intermédiaires contenues dans les trois derniers segments intermédiaires.

3. Procédé selon la revendication 2, **caractérisé par le fait qu'**on reconstitue les données contenues dans les deux premiers segments en les recalculant, et on reconstitue les données contenues dans les deux derniers segments en les stockant temporairement dans les moyens de mémorisation auxiliaires (MMX) avant de les en extraire.

4. Procédé selon la revendication 1, 2 ou 3, **caractérisé par le fait que**, deux blocs d'entrée successifs étant séparés par un intervalle de garde (IG), on stocke successivement toutes les données de l'intervalle de garde dans les moyens de mémoire principaux au fur et à mesure de la réception desdites données de l'intervalle de garde, on effectue ensuite des décalages successifs des emplacements de stockage des données de l'intervalle de garde, puis on les extrait successivement des moyens de mémorisation principaux (MM) pour les stocker successivement dans les moyens de mémorisation auxiliaires (MMX) avant de les en extraire successivement, de façon à restituer un intervalle de garde (IG!) temporellement retardé séparant les deux blocs reconstitués successifs temporellement retardés par rapport aux deux blocs d'entrée.

5. Procédé selon les revendications 2 et 4, **caractérisé par le fait qu'**on effectue les décalages successifs des emplacements de stockage des données de l'intervalle de garde (IG) et le stockage dans les moyens de mémorisation auxiliaires, au fur et à mesure de la réception des données contenues dans les trois premiers segments du bloc d'entrée.

**6.** Dispositif électronique de calcul d'une transformée de Fourier à architecture pipelinée, ledit dispositif comprenant au moins un étage de traitement à radix égal à 4 (ET0) apte à recevoir en entrée des blocs successifs de N données, **caractérisé par le fait que** ledit étage de traitement comporte des moyens de mémorisation principaux (MM) ayant une capacité de stockage égale à 3N/4 données et incluant une mémoire principale à accès aléatoire, des moyens de mémorisation auxiliaires (MMX) ayant une capacité de stockage égale à N/2 données et incluant une mémoire auxiliaire à accès aléatoire, des moyens de traitement principaux (MTE) effectuant des traitements de transformées de Fourier de taille élémentaire égale à 4 sur chaque bloc d'entrée à partir du contenu des moyens de mémorisation principaux (MM) et de N/4 autres données dudit bloc, et des moyens de traitement auxiliaires (MTX) reconstituant toutes les données du bloc d'entrée à partir du contenu des moyens de mémorisation principaux et auxiliaires de façon à obtenir un bloc de données reconstitué, temporellement retardé par rapport au bloc d'entrée.

**7.** Dispositif selon la revendication 6, **caractérisé par le fait que** les moyens de traitement principaux (MTE) de l'étage à radix 4 effectuent respectivement N/4 traitements du type "papillon" sur N/4 groupes distincts de quatre données de chaque bloc de données traité par cet étage, **par le fait que** les moyens de mémorisation principaux (MM) comprennent une mémoire principale à accès aléatoire et n registres principaux (REG1, REG2) mutuellement connectés en série avec la mémoire principale, **par le fait que** la mémoire principale est apte à stocker (N/4) - (n - 1) mots de trois données, **par le fait que** chaque registre principal est apte à stocker 1 mot de trois données, **par le fait que** les moyens de mémorisation auxiliaires comprennent une mémoire auxiliaire à accès aléatoire (MMX) et n registres auxiliaires (REG3, REG4) mutuellement connectés en série avec la mémoire auxiliaire, **par le fait que** la mémoire auxiliaire est apte à stocker (N/4) - (n - 1) mots de deux données, et **par le fait que** chaque registre auxiliaire est apte à stocker 1 mot de deux données.

**8.** Dispositif selon la revendication 6 ou 7, **caractérisé par le fait que** l'étage de traitement à radix 4 (ET0) comporte une entrée pour recevoir séquentiellement au rythme d'un premier signal d'horloge (SMCK) les N données d'un bloc courant ordonnées au sein de quatre segments consécutifs contenant chacun N/4 données, chaque donnée d'un segment formant avec les données homologues des trois autres segments un groupe de quatre données, **par le fait que** les moyens de traitement principaux (MTE) comportent un module additionneur/soustracteur (MD1) apte à effectuer, à chaque cycle du premier signal d'horloge, un traitement du type "papillon" sur chacun desdits groupes ainsi formés de façon à élaborer des groupes successifs de quatre données intermédiaires (A*) respectivement ordonnées au sein de quatre segments intermédiaires consécutifs, un module multiplicateur (MD2) apte à multiplier, à chaque cycle du premier signal d'horloge, les données intermédiaires par des coefficients multiplicateurs prédéterminés, et des moyens de commande principaux (MCE) aptes à délivrer aux moyens de mémorisation principaux (MM) les données contenues dans les trois premiers segments au fur et à mesure de leur réception, et aptes, au fur et à mesure de la réception des données contenues dans le quatrième segment, à remplacer respectivement les données mémorisées dans les moyens de mémorisation principaux par les données intermédiaires contenues dans les trois derniers segments intermédiaires, et **par le fait que** les moyens de traitement auxiliaires comportent un module auxiliaire de reconstitution (MDX) apte à recalculer les données du bloc d'entrée contenues dans les premier et deuxième segments, et des moyens de commande auxiliaires (MCX) aptes à délivrer aux moyens de mémorisation auxiliaires les données contenues dans le troisième segment et mémorisées dans les moyens de mémorisation principaux, ainsi que les données contenues dans le quatrième segment, et aptes à les en extraire de façon à reconstituer les données contenues dans les troisième et quatrième segments.

**9.** Dispositif selon la revendication 8, **caractérisé par le fait que** les moyens de mémorisation principaux comportent un premier registre principal (REG1) connecté à la sortie de la mémoire principale, un deuxième registre principal (REG2) connecté à l'entrée de la mémoire principale, **par le fait que** la sortie du premier registre principal est connecté en premier lieu à l'entrée du deuxième registre principal par l'intermédiaire d'un premier multiplexeur commandable (MX1), en deuxième lieu à l'entrée du module additionneur/soustracteur MD1), et en troisième lieu à l'entrée du module multiplicateur (MD2) par l'intermédiaire d'un deuxième multiplexeur commandable (MX2), **par le fait que** la sortie du module additionneur/soustracteur (MD1) est connectée d'une part à l'entrée du premier registre principal (REG1) par l'intermédiaire du premier multiplexeur (MX1) et d'autre part à l'entrée du module multiplicateur (MD2) par l'intermédiaire du deuxième multiplexeur (MX2),

**par le fait que** les moyens de mémorisation auxiliaires comportent un troisième registre auxiliaire (REG3) connecté à la sortie de la mémoire auxiliaire, un quatrième registre auxiliaire (REG4) connecté à l'entrée de la mémoire auxiliaire, **par le fait que** la sortie du troisième registre auxiliaire est connecté en premier lieu à l'entrée du quatrième registre auxiliaire par l'intermédiaire d'un troisième multiplexeur commandable (MX3) également connecté en entrée à la borne d'entrée (INS) de l'étage ainsi qu'à la sortie du premier registre principal (REG1), en deuxième lieu à l'entrée du module auxiliaire de reconstitution (MDX), et en troisième lieu à la sortie de délivrance des données reconstituées et retardées (OUD), par l'intermédiaire d'un quatrième multiplexeur commandable (MX4), **par le fait qu'**une entrée du module auxiliaire (MDX) est reliée à une sortie du premier registre principal, **par le fait que** la sortie du module auxiliaire de reconstitution est connectée à une entrée du quatrième multiplexeur (MX4),

et **par le fait que** les moyens de commande principaux (MCE) et les moyens de commande auxiliaires (MCX) comportent les quatre multiplexeurs, un premier compteur modulo N (WRC) cadencé par le premier signal d'horloge, réinitialisable à la réception de la première donnée de chaque bloc, un deuxième compteur modulo N (RDC) cadencé par le premier signal d'horloge, réinitialisable à l'émission de la première donnée de sortie de l'étage, et un module de commande (MCE, MCX) délivrant les signaux de commande des quatre multiplexeurs à partir des valeurs de comptage des deux compteurs, et **par le fait que** les moyens de traitement principaux et auxiliaires comprennent des moyens d'adressage communs de la mémoire principale et de la mémoire auxiliaire comportant un compteur modulo N/4 -1.

**10.** Dispositif selon l'une des revendications 6 à 9, **caractérisé par le fait que**, deux blocs d'entrée successifs étant séparés par un intervalle de garde (IG), les moyens de traitement principaux comportent des moyens de décalage (MX2) aptes à effectuer des décalages successifs des emplacements de stockage des données de l'intervalle de garde dans la mémoire principale.

**11.** Dispositif selon les revendications 9 et 10, **caractérisé par le fait que** les moyens de décalage comportent le deuxième multiplexeur (MX2).

**Patentansprüche**

**1.** Verfahren zur Steuerung einer Basis-4-Verarbeitungsstufe einer Vorrichtung zur Berechnung einer Fourier-Transformation in Pipeline-Architektur, **dadurch gekennzeichnet, daß**

für jeden am Eingang der Stufe empfangenen Block aus N Daten nur drei Viertel der Daten des Blocks in Hauptspeichereinrichtungen (MM), die einen Hauptspeicher mit wahlfreiem Zugriff aufweisen, gespeichert werden und ausgehend von diesen gespeicherten Daten und anderen Daten des Blocks eine Berechnung der Fourier-Transformation ausgeführt wird, und

dadurch, daß nur eine Hälfte der empfangenen Daten in Hilfsspeichereinrichtungen (MMX), die einen Hilfsspeicher mit wahlfreiem Zugriff aufweisen, gespeichert werden und ausgehend vom Inhalt der Haupt- und Hilfsspeichereinrichtungen alle Daten des Blocks rekonstruiert werden, um einen rekonstruierten Datenblock (BA!) zu erhalten, der bezüglich des Eingangsblocks (BA) zeitlich verzögert ist.

**2.** Verfahren nach Anspruch 1, **dadurch gekennzeichnet, daß**

die Stufe (ET0) die N Daten des Blocks nacheinander empfängt, die in vier aufeinanderfolgenden Segmenten, die jeweils N/4 Daten enthalten, angeordnet sind, wobei jedes Datum eines Segments mit den homologen Daten der drei anderen Segmente eine Gruppe aus vier Daten bildet,

dadurch, daß die in den ersten drei Segmenten enthaltenen Daten entsprechend ihrem Empfang in den Hauptspeichereinrichtungen (MM) gespeichert werden,

dadurch, daß entsprechend dem Empfang der im vierten Segment enthaltenen Daten die Daten, die im dritten Segment enthalten sind und in den Hauptspeichereinrichtungen (MM) gespeichert sind, sowie die im vierten Segment enthaltenen Daten in den Hilfsspeichereinrichtungen (MMX) gespeichert werden, an jeder dieser Gruppen eine Verarbeitung des "Schmetterlingstyps" ausgeführt wird, um aufeinanderfolgende Gruppen aus vier Zwischendaten (A*) auszuarbeiten, die jeweils in vier aufeinanderfolgenden Zwischensegmenten angeordnet sind, und die in den Hauptspeichereinrichtungen gespeicherten Daten jeweils durch die in den letzten drei Zwischensegmenten enthaltenen Zwischendaten ersetzt werden.

**3.** Verfahren nach Anspruch 2, **dadurch gekennzeichnet, daß** die in den ersten zwei Segmenten enthaltenen Daten rekonstruiert werden, indem sie wieder berechnet werden, und die in den letzten zwei Segmenten enthaltenen Daten rekonstruiert werden, indem sie temporär in den Hilfsspeichereinrichtungen (MMX) gespeichert werden, bevor sie daraus herausgeholt werden.

**4.** Verfahren nach Anspruch 1, 2 oder 3, **dadurch gekennzeichnet, daß**, wenn zwei aufeinanderfolgende Eingangsblöcke durch ein Schutzintervall (IG) getrennt sind, alle Daten des Schutzintervalls entsprechend dem Empfang der Daten dieses Schutzintervalls nacheinander in den Hauptspeichereinrichtungen gespeichert werden, anschließend aufeinanderfolgende Verschiebungen der Speicherorte der Daten des Schutzintervalls ausgeführt werden, sie dann nacheinander aus den Hauptspeichereinrichtungen (MM) herausgeholt werden, um sie nacheinander in den Hilfsspeichereinrichtungen (MMX) zu speichern, bevor sie daraus nacheinander herausgeholt werden, um ein zeitlich verzögertes Schutzintervall (IG!) wieder herzustellen, das die zwei aufeinanderfolgenden rekonstruierten, bezüglich der zwei Eingangsblöcke zeitlich verzögerten Blöcke trennt.

**5.** Verfahren nach den Ansprüchen 2 und 4, **dadurch gekennzeichnet, daß** die aufeinanderfolgenden Verschiebungen der Speicherorte der Daten des Schutzintervalls (IG) und die Speicherung in den Hilfsspeichereinrichtungen entsprechend dem Empfang der in den ersten drei Segmenten des Eingangsblocks enthaltenen Daten ausgeführt werden.

**6.** Elektronische Vorrichtung zur Berechnung einer Fourier-Transformation in Pipeline-Architektur, wobei die Vorrichtung mindestens eine Basis-4-Verarbeitungsstufe (ET0) aufweist, die am Eingang aufeinanderfolgende Blöcke aus N Daten empfangen kann, **dadurch gekennzeichnet, daß** die Verarbeitungsstufe aufweist: Hauptspeichereinrichtungen (MM), die eine Speicherkapazität von 3N/4 Daten haben und einen Hauptspeicher mit wahlfreiem Zugriff aufweisen, Hilfsspeichereinrichtungen (MMX), die eine Speicherkapazität von N/2 Daten haben und einen Hilfsspeicher mit wahlfreiem Zugriff aufweisen, Hauptverarbeitungseinrichtungen (MTE), die ausgehend vom Inhalt der Hauptspeichereinrichtungen (MM) und N/4 anderen Daten des Blocks Fourier-Transformationen einer Grundgröße gleich 4 an jedem Eingangsblock ausführen, und Hilfsverarbeitungseinrichtungen (MTX), die ausgehend vom Inhalt der Haupt- und Hilfsspeichereinrichtungen alle Daten des Eingangsblocks rekonstruieren, um einen rekonstruierten, bezüglich des Eingangsblocks zeitlich verzögerten Datenblock zu erhalten.

**7.** Vorrichtung nach Anspruch 6, **dadurch gekennzeichnet, daß** die Hauptverarbeitungseinrichtungen (MTE) der Basis-4-Stufe jeweils N/4 Verarbeitungen des Typs "Schmetterling" an N/4 unterschiedlichen Gruppen aus vier Daten jedes von dieser Stufe verarbeiteten Datenblocks ausführen, dadurch, daß die Hauptspeichereinrichtungen (MM) einen Hauptspeicher mit wahlfreiem Zugriff und n Hauptregister (REG1,REG2) aufweisen, die jeweils in Reihe mit dem Hauptspeicher verbunden sind, dadurch, daß der Hauptspeicher (N/4)-(n-1) Wörter aus drei Daten speichern kann, dadurch, daß jedes Hauptregister 1 Wort aus drei Daten speichern kann, dadurch, daß die Hilfsspeichereinrichtungen einen Hilfsspeicher mit wahlfreiem Zugriff (MMX) und n Hilfsregister (REG3,REG4) aufweisen, die jeweils in Reihe mit dem Hilfsspeicher verbunden sind, dadurch, daß der Hilfsspeicher (N/4)-(n-1) Wörter aus zwei Daten speichern kann und dadurch, daß jedes Hilfsregister 1 Wort aus zwei Daten speichern kann.

**8.** Vorrichtung nach Anspruch 6 oder 7, **dadurch gekennzeichnet, daß**

die Basis-4-Verarbeitungsstufe (ET0) einen Eingang aufweist, um im Takt eines ersten Taktsignals (SMCK) der Reihe nach die N Daten eines aktuellen Blocks zu empfangen, die in vier aufeinanderfolgenden Segmenten angeordnet sind, die jeweils N/4 Daten enthalten, wobei jedes Datum eines Segments mit den homologen Daten der drei anderen Segmente eine Gruppe aus vier Daten bildet,

dadurch, daß die Hauptverarbeitungseinrichtungen (MTE) aufweisen: ein Addierer/Subtrahierer-Modul (MD1), das bei jedem Zyklus des ersten Taktsignals eine Verarbeitung des Typs "Schmetterling" an jeder dieser so gebildeten Gruppen ausführen kann, um aufeinanderfolgende Gruppen aus vier Zwischendaten (A*) auszuarbeiten, die jeweils in vier aufeinanderfolgenden Zwischensegmenten angeordnet sind, ein Multipliziermodul (MD2), das bei jedem Zyklus des ersten Taktsignals die Zwischendaten mit vorgegebenen Multiplikatorkoeffizienten multiplizieren kann, und Hauptsteuereinrichtungen (MCE), die die in den ersten drei Segmenten enthaltenen Daten entsprechend ihrem Empfang nacheinander zu den Hauptspeichereinrichtungen (MM) schicken können und entsprechend dem Empfang der im vierten Segment enthaltenen Daten die in den Hauptspeichereinrichtungen gespeicherten Daten jeweils durch die in den letzten drei Zwischensegmenten enthaltenen Zwischendaten ersetzen können, und

dadurch, daß die Hilfsverarbeitungseinrichtungen aufweisen: ein Hilfsrekonstruktionsmodul (MDX), das die im ersten und zweiten Segment enthaltenen Daten des Eingangsblocks wieder berechnen kann, und Hilfssteuereinrichtungen (MCX), die die im dritten Segment enthaltenen und in den Hauptspeichereinrichtungen gespeicherten Daten sowie die im vierten Segment enthaltenen Daten zu den Hilfsspeichereinrichtungen schicken können und sie daraus herausholen können, um die im dritten und vierten Segment enthaltenen Daten zu rekonstruieren.

**9.** Vorrichtung nach Anspruch 8, **dadurch gekennzeichnet, daß**

die Hauptspeichereinrichtungen ein mit dem Ausgang des Hauptspeichers verbundenes erstes Hauptregister (REG1) und ein mit dem Eingang des Hauptspeichers verbundenes zweites Hauptregister (REG2) aufweisen,

dadurch, daß der Ausgang des ersten Hauptregisters erstens über einen ersten steuerbaren Multiplexer (MX1) mit dem Eingang des zweiten Hauptregisters verbunden ist, zweitens mit dem Eingang des Addierer/Subtrahierer-Moduls (MD1) verbunden ist und drittens über einen zweiten steuerbaren Multiplexer (MX2) mit dem Eingang des Multipliziderermoduls (MD2) verbunden ist,

dadurch, daß der Ausgang des Addierer/Subtrahierer-Moduls (MD1) einerseits über den ersten Multiplexer (MX1) mit dem Eingang des ersten Hauptregisters (REG1) verbunden ist und andererseits über den zweiten Multiplexer (MX2) mit dem Eingang des Multipliziderermoduls (MD2) verbunden ist,

dadurch, daß die Hilfsspeichereinrichtungen ein mit dem Ausgang des Hilfsspeichers verbundenes drittes Hilfsregister (REG3) und ein mit dem Eingang des Hilfsspeichers verbundenes viertes Hilfsregister (REG4) aufweisen,

dadurch, daß der Ausgang des dritten Hilfsregisters erstens über einen dritten steuerbaren Multiplexer (MX3), der auch am Eingang mit der Eingangsklemme (INS) der Stufe sowie mit dem Ausgang des ersten Hauptregisters (REG1) verbunden ist, mit dem Eingang des vierten Hilfsregisters verbunden ist, zweitens mit dem Eingang des Hilfsrekonstruktionsmoduls (MDX) verbunden ist und drittens über einen vierten steuerbaren Multiplexer (MX4) mit dem Ausgang zur Ausgabe der rekonstruierten und verzögerten Daten (OUD) verbunden ist,

dadurch, daß ein Eingang des Hilfsmoduls (MDX) mit einem Ausgang des ersten Hauptregisters verbunden ist,

dadurch, daß der Ausgang des Hilfsrekonstruktionsmoduls mit einem Eingang des vierten Multiplexers verbunden ist, und

dadurch, daß die Hauptsteuereinrichtungen (MCE) und die Hilfssteuereinrichtungen (MCX) aufweisen: vier Multiplexer, einen von dem ersten Taktsignal getakteten, beim Empfang des ersten Datums jedes Blocks wieder initialisierbaren ersten Modulo-N-Zähler (WRC), einen von dem ersten Taktsignal getakteten, bei der Ausgabe des ersten Ausgangsdatums der Stufe wieder initialisierbaren zweiten Modulo-N-Zähler (RDC) und ein Steuermodul (MCE,MCX), das ausgehend von den Zählwerten der zwei Zähler die Steuersignale für die vier Multiplexer bereitstellt, und

dadurch, daß die Haupt- und Hilfsverarbeitungseinrichtungen gemeinsame Einrichtungen zum Adressieren des Hauptspeichers und des Hilfsspeichers aufweisen, die einen Modulo-(N/4-1)-Zähler aufweisen.

**10.** Vorrichtung nach einem der Ansprüche 6 bis 9, **dadurch gekennzeichnet, daß**, wenn zwei aufeinanderfolgende Eingangsblöcke durch ein Schutzintervall (IG) getrennt sind, die Hauptverarbeitungseinrichtungen Verschiebungseinrichtungen (MX2) aufweisen, die aufeinanderfolgende Verschiebungen der Speicherorte der Daten des Schutzintervalls im Hauptspeicher ausführen können.

**11.** Vorrichtung nach den Ansprüchen 9 und 10, **dadurch gekennzeichnet, daß** die Verschiebungseinrichtungen den zweiten Multiplexer (MX2) aufweisen.

## Claims

**1.** Process for controlling a radix 4 processing stage of a device for computing a Fourier transform having pipelined architecture, **characterized in that**, for each block of N data received as input to the stage, only three quarters of the data of the block are stored in main storage means (MM) comprising a random-access main memory, and a Fourier transform computation is performed on the basis of these stored data and of the other data of the block, and **in that** only half of the data received are stored in auxiliary storage means (MMX) comprising a random-access auxiliary memory, and all the data of the block are reconstructed from the contents of the main and auxiliary storage means in such a way as to obtain a reconstructed data block (BA!), temporally delayed with respect to the input block (BA).

**2.** Process according to Claim 1, **characterized in that** the stage (ET0) sequentially receives the N data of the block, these data being ordered within four consecutive segments each containing N/4 data, each datum of a segment forming, together with the counterpart data of the other three segments, a group of four data, **in that** the data contained in the first three segments are stored in the main storage means (MM) as they are received, **in that** as the data contained in the fourth segment are received, the data contained in the third segment and stored in the main storage means are stored in the auxiliary storage means (MMX), as are the data contained in the fourth segment, a processing operation of the "butterfly" type is performed on each of the said groups so as to derive successive groups of four intermediate data (A*) ordered respectively within four consecutive intermediate segments, and the data stored in the main storage means are replaced respectively by the intermediate data contained in the last three intermediate segments.

**3.** Process according to Claim 2, **characterized in that** the data contained in the first two segments are reconstructed by recomputing them, and the data contained in the last two segments are reconstructed by storing them temporarily in the auxiliary storage means (MMX) before extracting them therefrom.

4. Process according to Claim 1, 2 or 3, **characterized in that**, since two successive input blocks are separated by a guard interval (IG), all the data of the guard interval are stored in succession in the main memory means as the said data of the guard interval are received, successive shifts of the storage locations of the data of the guard interval are subsequently, performed and they are then extracted in succession from the main storage means (MM) so as to store them in succession in the auxiliary storage means (MMX) before extracting them therefrom in succession, in such a way as to retrieve a temporally delayed guard interval (IG!) separating the two successive reconstructed blocks temporally delayed with respect to the two input blocks.

5. Process according to Claims 2 and 4, **characterized in that** the successive shifts of the storage locations of the data of the guard interval (IG) and the storing in the auxiliary storage means are performed as the data contained in the first three segments of the input block are received.

6. Electronic device for computing a Fourier transform having pipelined architecture, the said device comprising at least one processing stage with radix equal to 4 (ET0) able to receive as input successive blocks of N data, **characterized in that** the said processing stage comprises main storage means (MM) having a storage capacity equal to 3N/4 data and including a random-access main memory, auxiliary storage means (MMX) having a storage capacity equal to N/2 data and including a random-access auxiliary memory, main processing means (MTE) performing processing operations for Fourier transforms of elementary size equal to 4 on each input block on the basis of the contents of the main storage means (MM) and of N/4 other data of the said block, and auxiliary processing means (MTX) which reconstruct all the data of the input block from the contents of the main and auxiliary storage means in such a way as to obtain a reconstructed data block temporally delayed with respect to the input block.

7. Device according to Claim 6, **characterized in that** the main processing means (MTE) of the radix 4 stage respectively perform N/4 processing operations of the "butterfly" type on N/4 distinct groups of four data of each data block processed by this stage, **in that** the main storage means (MM) comprise a random-access main memory and n main registers (REG1, REG2) mutually connected in series with the main memory, **in that** the main memory is able to store (N/4) - (n - 1) words of three data, **in that** each main register is able to store 1 word of three data, **in that** the auxiliary storage means comprise a random-access auxiliary memory (MMX) and n auxiliary registers (REG3, REG4) mutually connected in series with the auxiliary memory, **in that** the auxiliary memory is able to store (N/4) - (n - 1) words of two data, and **in that** each auxiliary register is able to store 1 word of two data.

8. Device according to Claim 6 or 7, **characterized in that** the radix 4 processing stage (ET0) comprises an input for sequentially receiving, at the tempo of a first clock signal (SMCK), the N data of a current block, these data being ordered within four consecutive segments each containing N/4 data, each datum of a segment forming, together with the counterpart data of the other three segments, a group of four data, **in that** the main processing means (MTE) comprise an adder/subtractor module (MD1) able to perform, at each cycle of the first clock signal, a processing operation of the "butterfly" type on each of the said groups thus formed so as to derive successive groups of four intermediate data (A*) respectively ordered within four consecutive intermediate segments, a multiplier module (MD2) able to multiply, at each cycle of the first clock signal, the intermediate data by predetermined multiplier coefficients, and main control means (MCE) able to deliver to the main storage means (MM) the data contained in the first three segments as they are received, and able, as the data contained in the fourth segment are received, respectively to replace the data stored in the main storage means by the intermediate data contained in the last three intermediate segments, and **in that** the auxiliary processing means comprise an auxiliary reconstruction module (MDX) able to recompute the data of the input block which are contained in the first and second segments, and auxiliary control means (MCX) able to deliver to the auxiliary storage means the data contained in the third segment and stored in the main storage means, as well as the data contained in the fourth segment, and able to extract them therefrom in such a way as to reconstruct the data contained in the third and fourth segments.

9. Device according to Claim 8, **characterized in that** the main storage means comprise a first main register (REG1) connected to the output of the main memory, a second main register (REG2) connected to the input of the main memory, **in that** the output of the first main register is connected firstly to the input of the second main register by way of a first controllable multiplexer (MX1), secondly to the input of the adder/subtractor module (MD1), and thirdly to the input of the multiplier module (MD2) by way of a second controllable multiplexer (MX2), **in that** the output of the adder/subtractor module (MD1) is connected on the one hand to the input of the first main register (REG1) by way of the first multiplexer (MX1) and on the other hand to the input of the multiplier module (MD2) by way of the second multiplexer (MX2),

**in that** the auxiliary storage means comprise a third auxiliary register (REG3) connected to the output of the auxiliary memory, a fourth auxiliary register (REG4) connected to the input of the auxiliary memory, **in that** the output of the third auxiliary register is connected firstly to the input of the fourth auxiliary register by way of a third controllable multiplexer (MX3) also input-connected to the input terminal (INS) of the stage as well as to the output of the first main register (REG1), secondly to the input of the auxiliary reconstruction module (MDX), and thirdly to the output for delivering the reconstructed and delayed data (OUD), by way of a fourth controllable multiplexer (MX4), **in that** an input of the auxiliary module (MDX) is linked to an output of the first main register, **in that** the output of the auxiliary reconstruction module is connected to an input of the fourth multiplexer (MX4),

and **in that** the main control means (MCE) and the auxiliary control means (MCX) comprise the four multiplexers, a first counter modulo N (WRC) clocked by the first clock signal, reinitializable on reception of the first datum of each block, a second counter modulo N (RDC) clocked by the first clock signal, reinitializable on transmission of the first output datum from the stage, and a control module (MCE, MCX) delivering the control signals for the four multiplexers on the basis of the count values from the two counters, and **in that** the main and auxiliary processing means comprise common means for addressing the main memory and the auxiliary memory comprising a counter modulo N/4-1.

**10.** Device according to one of Claims 6 to 9, **characterized in that**, since two successive input blocks are separated by a guard interval (IG), the main processing means comprise shift means (MX2) able to perform successive shifts of the storage locations of the data of the guard interval in the main memory.

**11.** Device according to Claims 9 and 10, **characterized in that** the shift means comprise the second multiplexer (MX2).

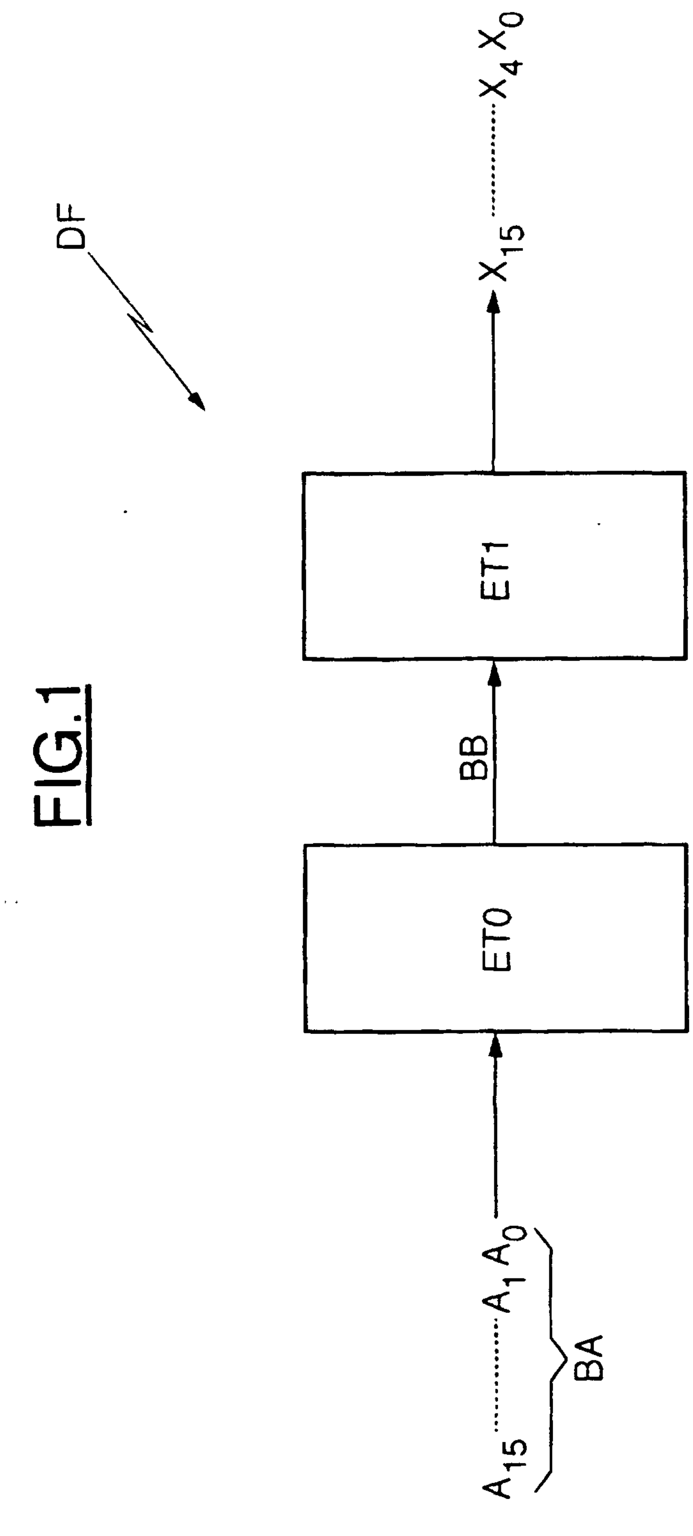


FIG.1

FIG.2

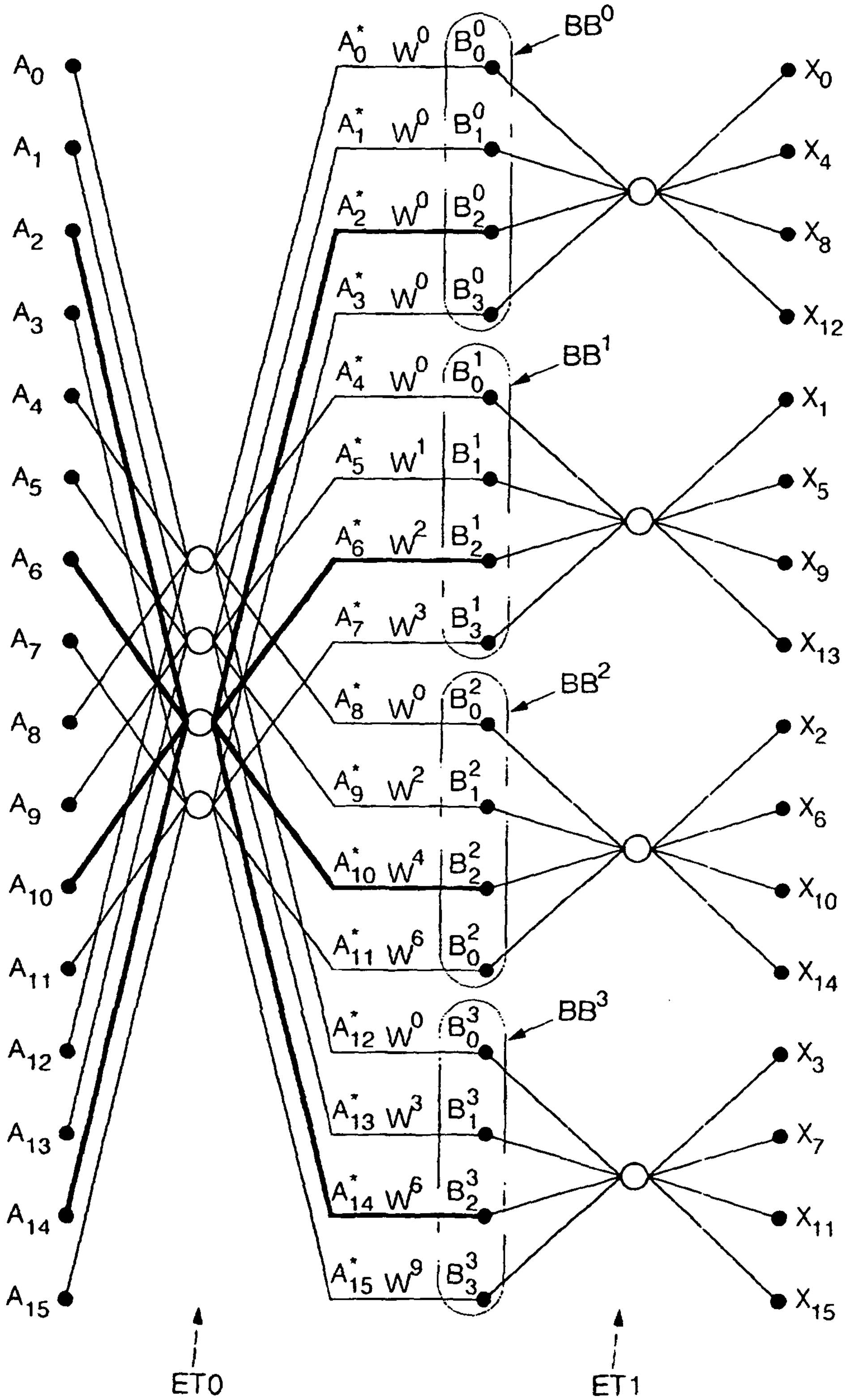
A0
A1
A2
A3
A4
A5
A6
A7
A8
A9
A10
A11
A12
A13
A14
A15
A*0 W0 B00
A*1 W0 B01
A*2 W0 B02
A*3 W0 B03
A*4 W0 B10
A*5 W1 B11
A*6 W2 B12
A*7 W3 B13
A*8 W0 B20
A*9 W2 B21
A*10 W4 B22
A*11 W6 B20
A*12 W0 B30
A*13 W3 B31
A*14 W6 B32
A*15 W9 B33
BB0
BB1
BB2
BB3
X0
X4
X8
X12
X1
X5
X9
X13
X2
X6
X10
X14
X3
X7
X11
X15
ET0
ET1

FIG.3

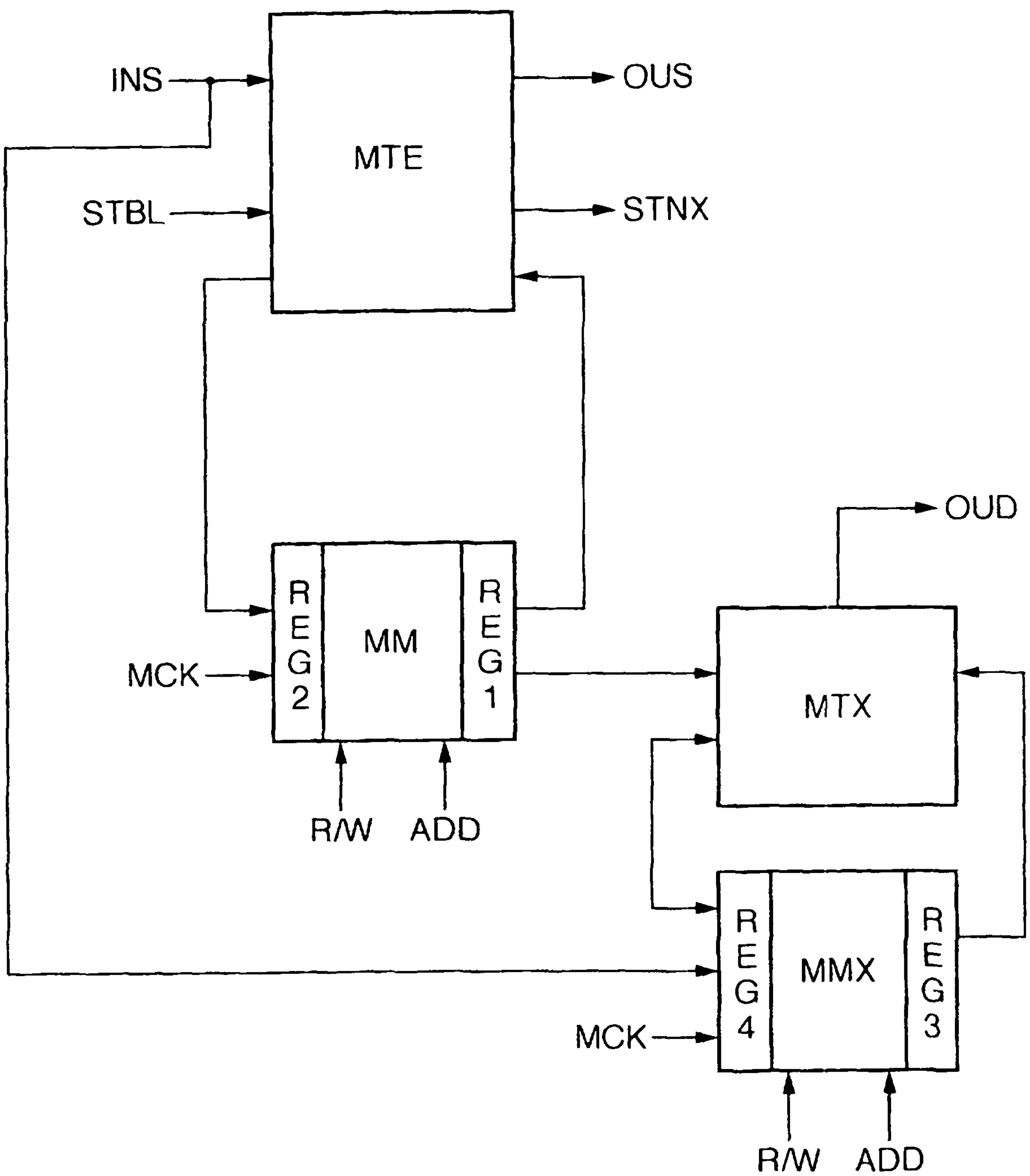
INS
OUS
MTE
STBL
STNX
OUD
REG 2
MM
REG 1
MCK
MTX
R/W
ADD
REG 4
MMX
REG 3
MCK
R/W
ADD

FIG.4a

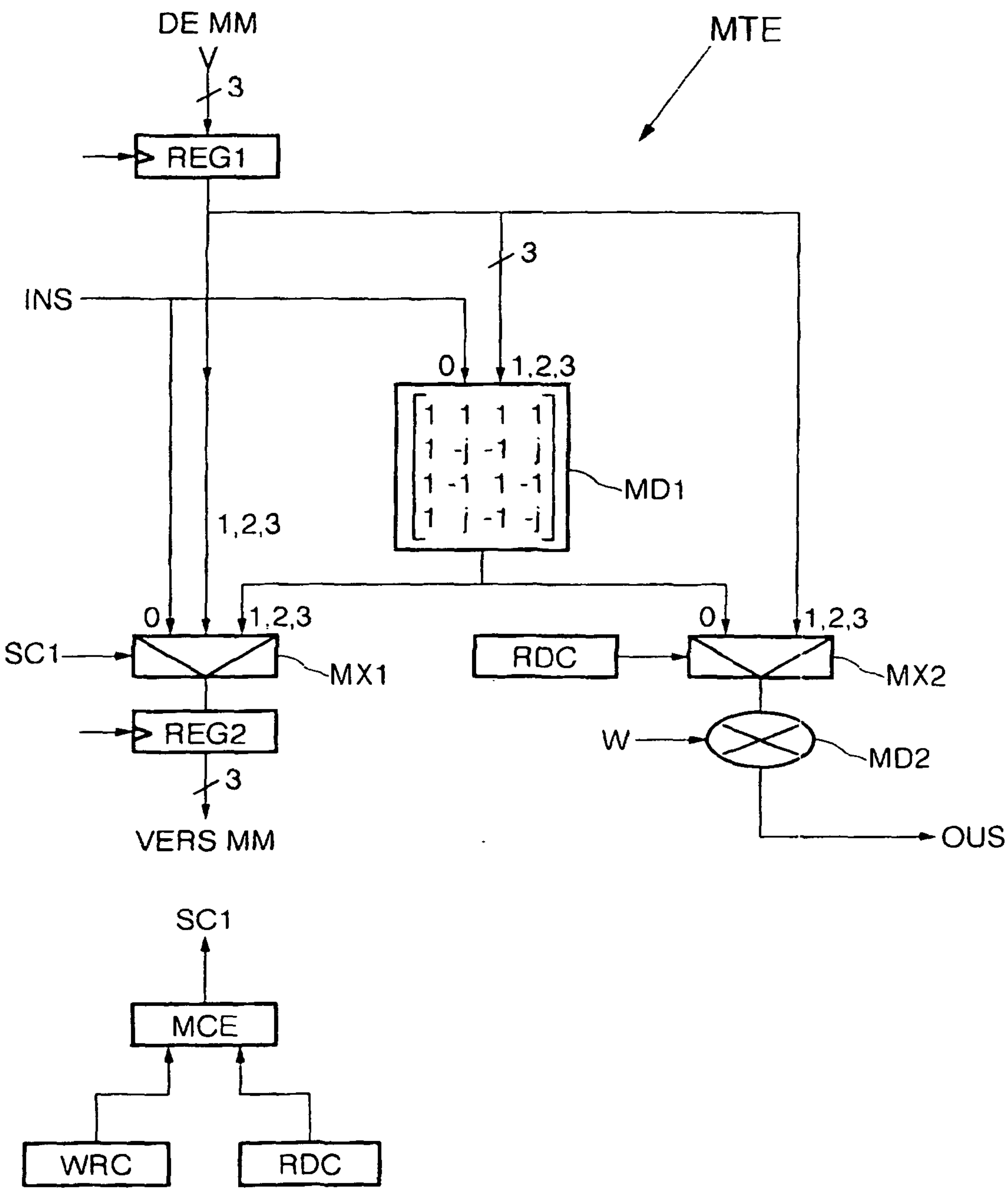
DE MM
3
MTE
REG1
3
INS
0
1,2,3
1 1 1 1
1 -j -1 j
1 -1 1 -1
1 j -1 -j
MD1
1,2,3
0
1,2,3
0
1,2,3
SC1
MX1
RDC
MX2
REG2
W
MD2
3
VERS MM
OUS
SC1
MCE
WRC
RDC

FIG.4b

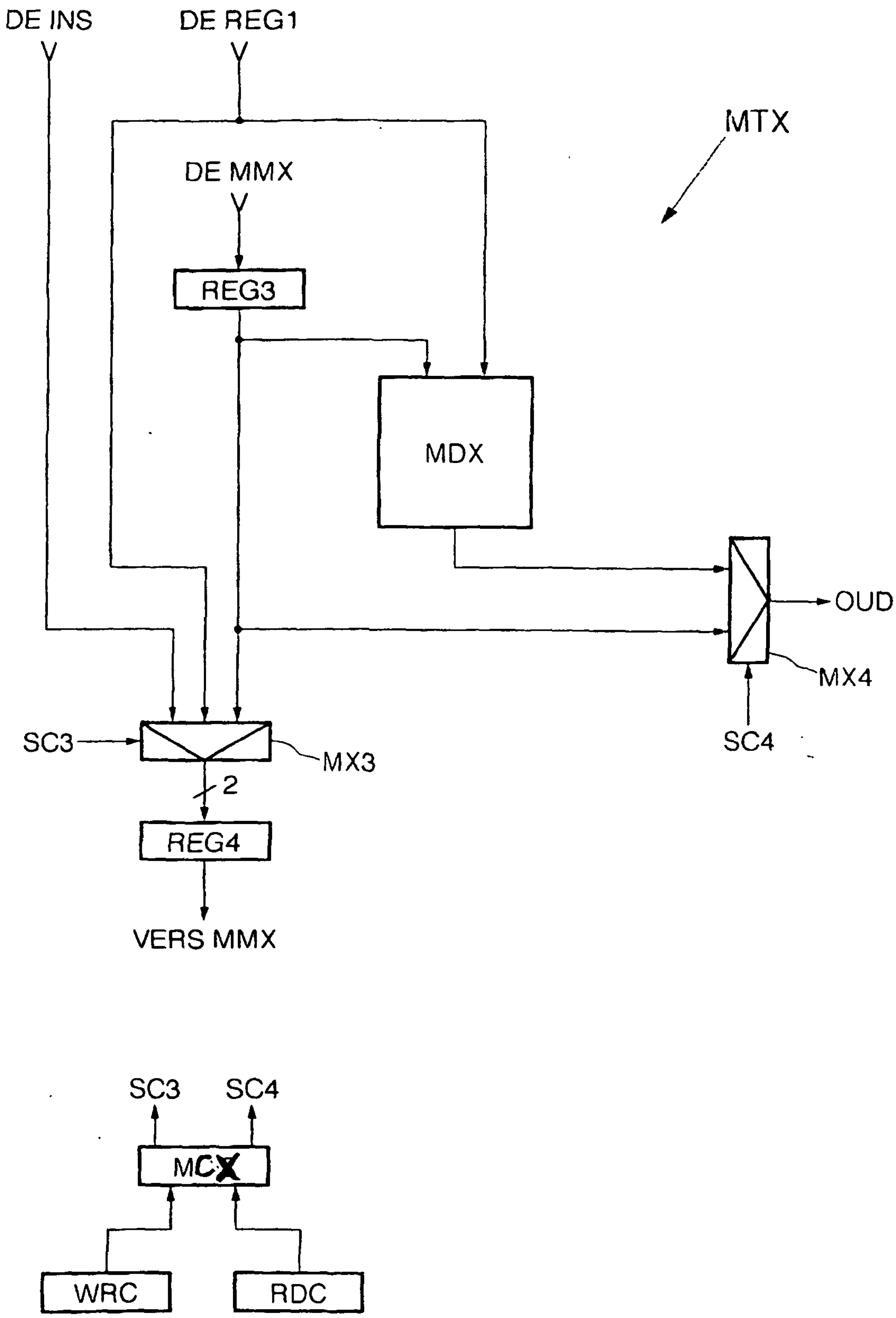
DE INS
DE REG1
MTX
DE MMX
REG3
MDX
OUD
MX4
SC4
SC3
MX3
2
REG4
VERS MMX
SC3
SC4
MCX
WRC
RDC

FIG.5

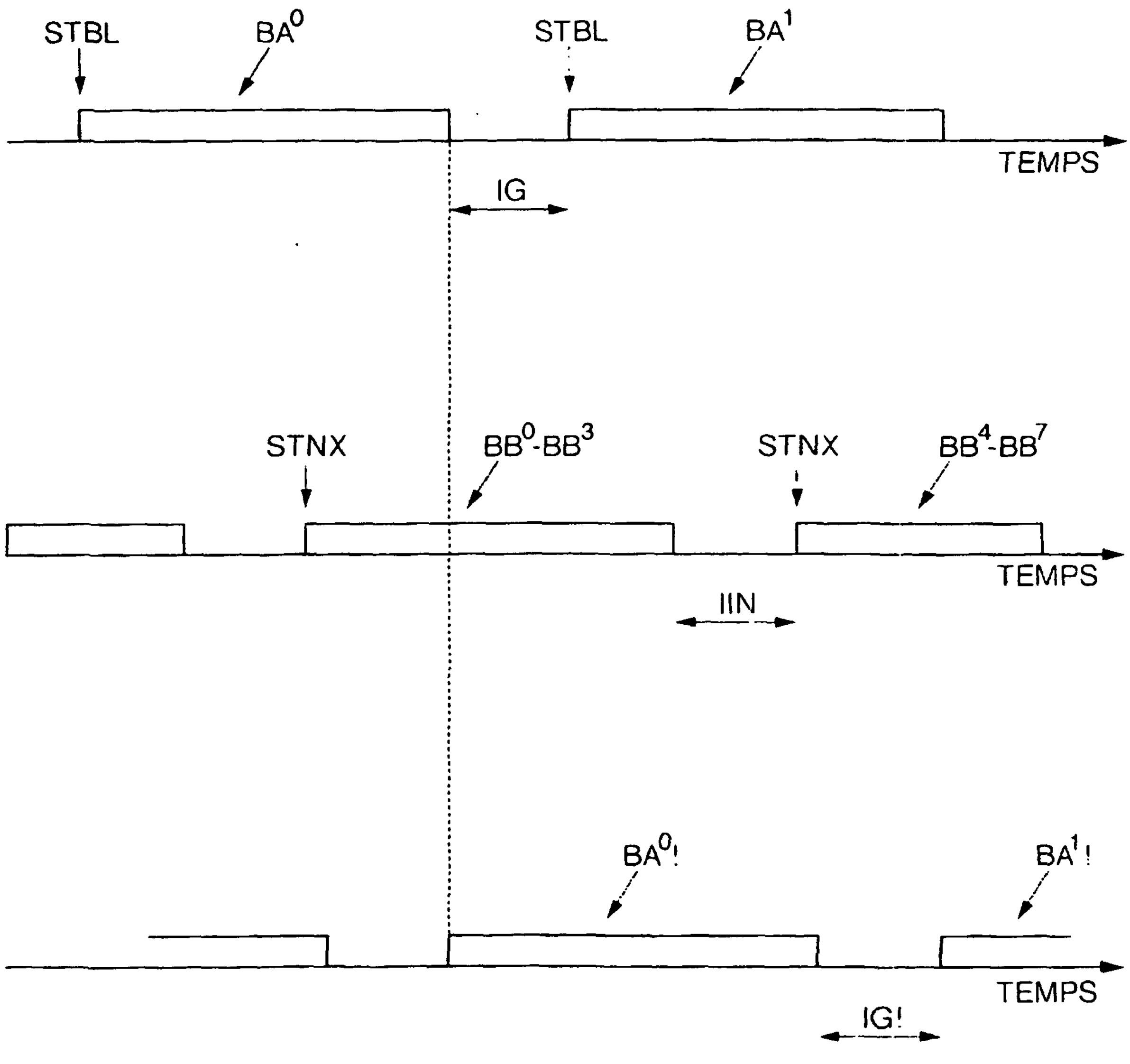
STBL
BA0
STBL
BA1
TEMPS
IG
STNX
BB0-BB3
STNX
BB4-BB7
TEMPS
IIN
BA0!
BA1!
TEMPS
IG!

FIG.6a

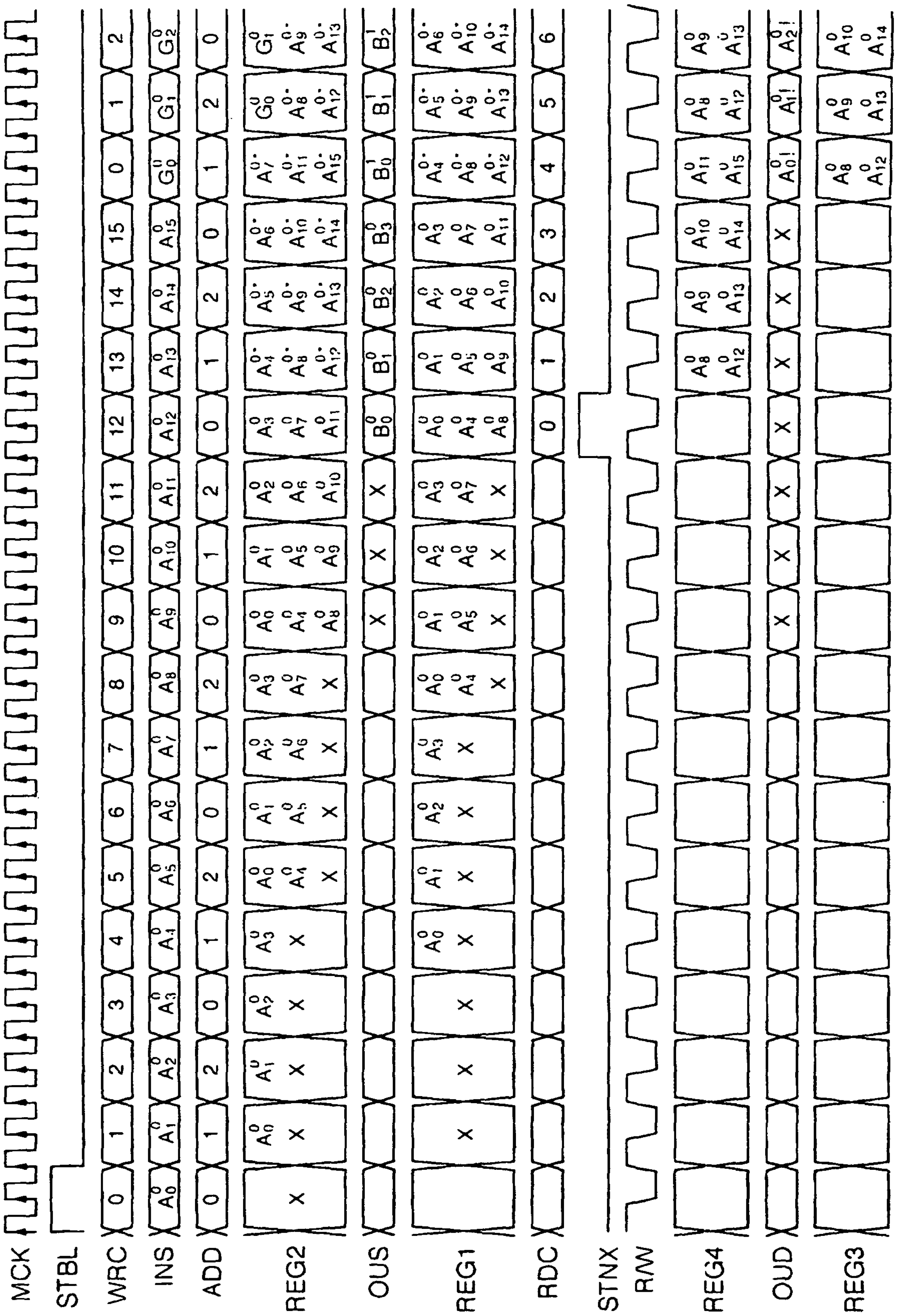

FIG.6b